# EUROPÄISCHE PATENTSCHRIFT

(11) **EP 2 828 613 B1**
(45) Veröffentlichungstag und Bekanntmachung des Hinweises auf die Patenterteilung: **15.05.2019**
(21) Anmeldenummer: 13714550.4
(22) Anmeldetag: 21.03.2013
(51) Int. Cl.: G01B 9/02

(54) **SWEPT-SOURCE-OCT-SYSTEM UND -VERFAHREN MIT PHASENGELOCKTER DETEKTION**
SWEPT SOURCE OCT SYSTEM AND METHOD WITH PHASE-LOCKED DETECTION
L'INVENTION CONCERNE UN SYSTÈME D'OCT À SOURCE DE BALAYAGE ET UNE MÉTHODE AVEC DÉTECTION À VERROUILLAGE DE PHASE

(30) Priorität: 21.03.2012 DE 102012102424; 04.02.2013 DE 102013101094
(43) Veröffentlichungstag der Anmeldung: 28.01.2015
(73) Patentinhaber: Ludwig-Maximilians-Universität München, 80539 München (DE)
(72) Erfinder: HUBER, Robert Alexander, 83530 Schnaitsee (DE); KLEIN, Thomas, 80335 München (DE); WIESER, Wolfgang, 80687 München (DE)
(74) Vertreter: Lucke, Andreas
(86) Internationale Anmeldenummer: PCT/EP2013/000865
(87) Internationale Veröffentlichungsnummer: WO 2013/139480

(56) Entgegenhaltungen:
- US-A1- 2006 279 742
- US-A1- 2009 046 295
- MARINKO V. SARUNIC ET AL: "Instantaneous complex conjugate resolved spectral domain and swept-source OCT using 3x3 fiber couplers", OPTICS EXPRESS, Bd. 13, Nr. 3, 1. Januar 2005 (2005-01-01) , Seite 957, XP55069507, ISSN: 1094-4087, DOI: 10.1364/OPEX.13.000957
- CEDRIC BLATTER ET AL: "Intrasweep phase-sensitive optical coherence tomography for noncontact optical photoacoustic imaging", OPTICS LETTERS, OSA, OPTICAL SOCIETY OF AMERICA, WASHINGTON, DC, US, Bd. 37, Nr. 21, 1. November 2012 (2012-11-01), Seiten 4368-4370, XP001579227, ISSN: 0146-9592, DOI: 10.1364/OL.37.004368 [gefunden am 2012-10-17]
- D. C. ADLER, R. HUBER, J. G. FUJIMOTO: "Phase sensitive optical coherence tomography using buffered Fourier Domain Mode Locked lasers at up to 370,000 scans per second", SPIE, PO BOX 10 BELLINGHAM WA 98227-0010 USA, 2007, XP040234300,

## Beschreibung

### GEBIET DER ERFINDUNG

Die vorliegende Erfindung liegt auf dem Gebiet der medizinischen Bildgebung. Genauer betrifft sie ein Swept-Source-OCT-System und ein Swept-Source-OCT-Verfahren, sowie ein OCT-basiertes Verfahren zur photoakustischen Detektion.

### HINTERGRUND UND VERWANDTER STAND DER TECHNIK

Die optische Kohärenztomographie (Optical CoherenceTomography, OCT) ist ein optisches Verfahren, mit dem 3D-Bilder von optisch streuenden Medien, wie beispielsweise biologischem Gewebe, mit einer Auflösung im Mikrometerbereich aufgenommen werden können. Die Tiefenrichtung der Probe, d. h. die Dimension entlang der Einstrahlrichtung eines Probenstrahles wird dabei dadurch erfasst, dass - vereinfacht gesprochen - der Abstand von Streuzentren innerhalb der Probe von der Lichtquelle durch interferometrische Signale gemessen wird. Bei der OCT wird Licht mit vergleichsweise langer Wellenlänge, typischerweise im Nah-Infrarotbereich, verwendet. Dies hat den Vorteil, dass das Licht vergleichsweise tief in das Streumedium eindringen kann, wodurch Tiefenschnitte mit einer nahezu mikroskopischen Auflösung aufgenommen werden können. Die OCT hat sich besonders bei der Bildgebung des menschlichen Auges bewährt, wo sie es gestattet, hochaufgelöste Bilder der Retina und des vorderen Augenabschnitts aufzunehmen. Eine weitere sehr attraktive Anwendung der OCT, die Gegenstand intensiver Entwicklungstätigkeit ist, betrifft die intravaskuläre Bildgebung in der Kardiologie.

Wie bei allen interferometrischen Verfahren, ist es auch bei der OCT möglich, das Interferenzsignal im Zeit- oder im Frequenzraum zu messen. Im ersten Fall spricht man von TD(Time Domain)-OCT, im zweiten von FD(Frequency Domain)-OCT.

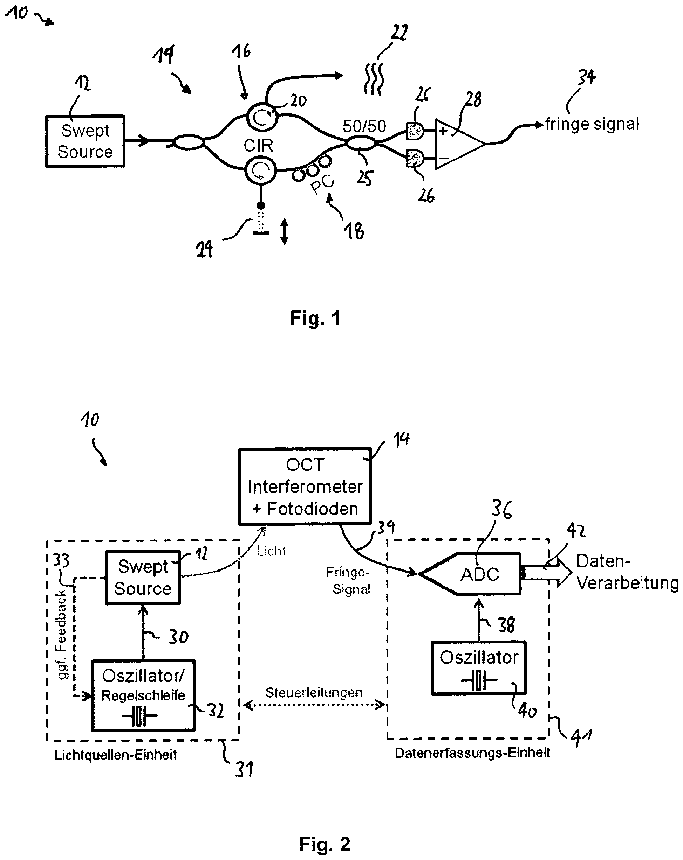

Eine besonders leistungsfähige Variante der FD-OCT ist die sogenannte "Swept-Source-OCT", die unter Bezugnahme auf Fig. 1 erläutert wird. Die Fig. 1 zeigt ein Swept-Source-OCT-System 10 mit einer abstimmbaren Lichtquelle 12, der sogenannten "Swept-Source" 12. Die abstimmbare Lichtquelle 12 führt mit einer bestimmten Repetitionsrate f_{sweep} Wellenlängen-Sweeps durch, in denen sie optische Signale erzeugt, in deren zeitlichen Verlauf sich die Wellenlänge des Signals ändert. Derartige Signale werden auch als "Chirps" bezeichnet. Das Signal wird in ein Interferometer 14 eingekoppelt, das einen ersten Arm 16 und einen zweiten Arm 18 hat. In dem ersten Arm 16 wird das optische Signal über einen Zirkulator 20 zu einer Probe 22 geführt. Das optische Signal dringt bis zu einer gewissen Tiefe in die Probe 22 ein und wird in der Probe 22 gestreut, sodass ein Teil des Lichtes in den ersten Interferometerarm 16 zurück reflektiert wird. Je nach lokaler Zusammensetzung der Probe 22 wird das optische Signal stärker oder schwächer gestreut bzw. reflektiert. Auf diese Weise können unterhalb der Oberfläche der Probe 22 liegende Schichten, an denen das optische Signal vergleichsweise stark gestreut bzw. reflektiert wird, "sichtbar" gemacht werden.

Der zweite Arm 18 des Interferometers 14 ist ein Referenzarm, der eine Verzögerungsstrecke 24 enthält. Die optischen Signale in den beiden Interferometerarmen 16 und 18 werden, beispielsweise mit Hilfe eines 50/50-Kopplers 25, überlagert, und es wird, beispielsweise mit Hilfe von Photodetektoren 26 und eines differenziellen Verstärkers 28, ein Interferenzsignal 34 erzeugt, welches im Fachgebiet auch als "Fringe-Signal" 34 bezeichnet wird.

Das Interferenzsignal 34 besteht demnach aus der Überlagerung zweier optischer Signale mit sich zeitlich ändernden Wellenlängen (Chirps). Dabei sind die beiden überlagerten Signale zeitlich gegeneinander in einem Ausmaß verschoben, das von dem Laufzeitunterschied entlang des ersten und des zweiten Armes 16, 18 abhängt. Dieser Laufzeitunterschied hängt von der Tiefe ab, in der das Licht innerhalb der Probe 22 gestreut wurde. In einer beispielhaften Ausführung ist die optische Wellenlängendifferenz und somit die zeitliche Verschiebung der Signale relativ zueinander umso geringer, je tiefer das Streuzentrum liegt. Da sich die Wellenlänge der Signale aufgrund des Wellenlängen-Sweeps zeitlich ändert, weichen die Wellenlängen in der Überlagerung mit zunehmender zeitlicher Verschiebung stärker voneinander ab, wodurch eine Schwebung im Interferenzsignal erzeugt wird, dessen Frequenz mit zunehmender zeitlicher Verschiebung ansteigt. Einfach gesprochen führt im beschriebenen Fall eine Streuung bzw. Reflexion an einem tiefliegenden Streuzentrum der Probe 22 zu einem hochfrequenten Interferenzsignal 34 und eine Streuung an der Oberfläche der Probe 22 zu einem Interferenzsignal 34 mit geringerer Schwebungsfrequenz. Je nach Abstimmung der Länge der Interferometerarme 16, 18 kann ein geringer Laufzeitunterschied (und damit eine geringe Schwebungsfrequenz) aber auch für eine tiefe Schicht erhalten werden, statt für die Oberfläche. Unabhängig von der speziellen Konfiguration können auf diese Weise grundsätzlich Tiefenschnitte der Probe 22 in Form von Frequenzinformationen aufgezeichnet werden.

Fig. 2 zeigt den schematischen Aufbau eines konventionellen OCT-Systems, bei dem das Interferometer 14 ähnlich aufgebaut ist wie in Fig. 1, jedoch nicht im Detail gezeigt ist. Das OCT-System 10 von Fig. 2 enthält ebenfalls eine abstimmbare Lichtquelle 12, die ein Sweep-Steuerungssignal 30 empfängt, welches von einem Oszillator 32 erzeugt wird. Das Sweep-Steuerungssignal 30 bestimmt die Repetitionsrate f_{sweep}, mit der die Lichtquelle 12 durchgestimmt wird. Dazu kann das Sweep-Steuerungssignal 30 selbst die Frequenz f_{sweep} oder ein Vielfaches hiervon aufweisen.

Man beachte, dass der Oszillator 32 Teil einer Lichtquellen-Einheit 31 sein kann, die in Fig. 2 durch den gestrichelten Kasten schematisch dargestellt ist. Der Oszillator 32 kann beispielsweise Teil der Steuerungselektronik der Lichtquelleneinheit 31 sein. Das Sweep-Steuerungssignal 30 kann irgendein geeignetes Signal sein, dessen Frequenz die Repetitionsrate f_{sweep} der Lichtquelle 12 beeinflusst. Die konkrete Ausgestaltung des Sweep-Steuerungssignals 30 hängt dabei vom jeweiligen Aufbau der abstimmbaren Lichtquelle 12 ab. Wie ferner in Fig. 2 zu sehen ist, kann eine Rückkopplung 33 zwischen der abstimmbaren Lichtquelle 12 und dem Oszillator 32 vorgesehen sein, um die Frequenz des Oszillators 32 an den Betrieb der abstimmbaren Lichtquelle 12 anzupassen. Dies ist beispielsweise von Bedeutung, wenn ein FDML Laser als Lichtquelle 12 eingesetzt wird, bei dem die Sweep-Rate präzise auf die Umlaufperiode des Lichtes angepasst werden muss, die sich beispielsweise in Folge von Temperaturschwankungen ändern kann.

Das Interferenzsignal 34 aus dem Interferometer 14 wird mit einem AD-Wandler 36 abgetastet, der einer Detektionseinrichtung zum zeitaufgelösten Detektieren des Interferenzsignals 34 darstellt. Im Rahmen der vorliegenden Erfindung wird das Interferenzsignal 34 "mithilfe" des Detektions-Taktsignales 38 detektiert. Mit anderen Worten wird das Detektion-Taktsignal 38 im Betrieb der Detektionsvorrichtung 36 verwendet und es beeinflusst oder bestimmt direkt oder indirekt das Zeitverhalten der Detektionsvorrichtung 36. Insbesondere kann es die Zeitpunkte oder den Takt festlegen, zu dem das Interferenzsignal 34 detektiert bzw. gesampelt wird. Im konkreten Ausführungsbeispiel hat der AD-Wandler 36 einen Eingang für ein Detektions-Taktsignal 38, das von einem weiteren Oszillator 40 erzeugt wird. Der AD-Wandler 36 setzt das Interferenzsignal 34 zu Zeitpunkten, die durch das Detektions-Taktsignal 38 definiert sind, in digitale Daten 42 um. In der Darstellung von Fig. 2 sind der AD-Wandler 36 und der weitere Oszillator 40 Teil einer Datenerfassungseinheit 41, die durch einen gestrichelten Kasten angedeutet ist. Die nominellen Frequenzen der Oszillatoren 32 und 40 stehen in einem bestimmten, nicht notwendigerweise ganzzahligen Verhältnis zueinander, so dass der zeitliche Verlauf des Frequenz-Sweeps und der Detektion rechnerisch in Bezug zueinander gesetzt werden können, die Oszillatoren 32 und 40 selbst laufen jedoch an sich unabhängig voneinander. Man beachte, dass der Begriff "Oszillator" in der vorliegenden Offenbarung breit zu verstehen ist, und insbesondere nicht auf irgendeinen speziellen Oszillatortyp, wie beispielsweise einen Quarz-Oszillator, beschränkt ist. Beispielsweise kann der Oszillator auch durch ein DDS gebildet sein, durch einen analogen Oszillator, der auf eine Resonanz der abstimmbaren Lichtquelle geregelt ist, etc.

Jeder Wellenlängen-Sweep der Lichtquelle 12 entspricht einem Tiefenschnitt des OCT-Systems 10. Zu Beginn eines jeden Wellenlängen-Sweeps wird ein Trigger-Signal (in Fig. 2 nicht gezeigt) an den AD-Wandler 36 übermittelt, um die digitalen Daten 42 dem zugehörigen Wellenlängen-Sweep zuzuordnen.

Das Detektions-Taktsignal 38 hat eine Frequenz fₛₐₘₚ, die die Abtast- bzw. Sampling-Rate, mit der das Interferenzsignal 34 durch den AD-Wandler 36 abgetastet wird, definiert. Die Abtastrate fₛₐₘₚ beträgt dabei typischerweise mindestens das 2,5-fache der höchsten zu detektierenden Frequenz des Interferenzsignals 34. Nach dem Nyquist-Kriterium würde die doppelte Abtastrate ausreichen, jedoch nimmt dann die Response am oberen Ende des Frequenzbandes ab, was man durch ein stärkeres Übersampeln um Faktoren von 2,5 bis 5 in der Praxis vermeidet. In praktischen Anwendungen ist fₛₐₘₚ>> f_{scan}, üblicherweise um einen Faktor von 500 bis 2000.

Bei dem OCT-System von Fig. 2 wird das Interferenzsignal 34 somit in konstanten Zeitintervallen, die durch den Kehrwert von fₛₐₘₚ bestimmt sind, abgetastet. Bei der Bildgenerierung, die auf einer Fourier-Transformation beruht, ist es aber notwendig, dass die Abtastpunkte äquidistant in der optischen Frequenz sind. Dies ist bei zeitlich äquidistantem Sampling nur dann der Fall, wenn die optische Frequenzänderung der abstimmbaren Lichtquelle 12 beim Wellenlängen-Sweep linear in der Zeit ist, was in der Praxis jedoch kaum zu erreichen ist. Daher werden die digitalen Daten 42 üblicherweise nachträglich bearbeitet, was man als "Resampling" bezeichnet. Bei einem Resampling wird das Interferenzsignal 34 an bestimmten zeitlichen Stützstellen durch Interpolation der gemessenen digitalen Daten 42 ermittelt, wobei die Stützstellen so gewählt sind, dass die Abtastpunkte äquidistant in der optischen Frequenz des Interferenzsignals 34 sind.

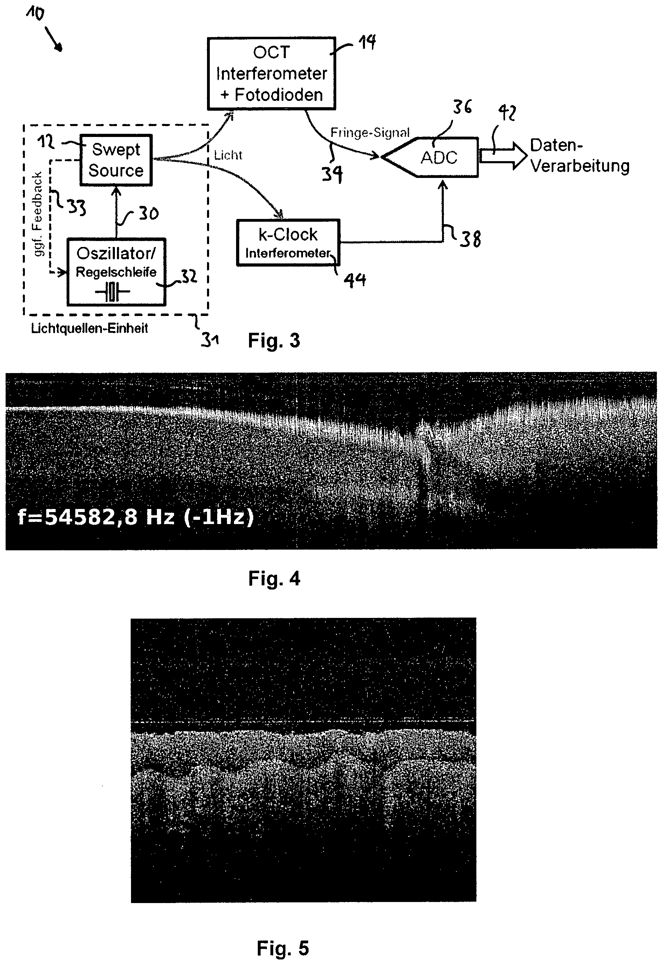

Alternativ kann das Detektions-Taktsignal 38 auch als zeitlich variables Taktsignal erzeugt werden, das so geartet ist, dass die Samples bereits linear im optischen Frequenzunterschied erzeugt werden. Ein derartiges Taktsignal ist als "k-clock" von OCT-Systemen bekannt, wobei das "k" für die Wellenzahl steht. Das k-clock-Signal ist dabei typischerweise ein Puls-Zug mit variablen Abständen im Zeitbereich aber gleichen Abständen im optischen Frequenzbereich. In Fig. 3 ist ein OCT-System mit einer solchen k-clock schematisch dargestellt. Die k-clock wird durch ein zusätzliches Interferometer 44 mit konstantem Armlängenunterschied direkt aus dem Licht der abstimmbaren Lichtquelle 12 erzeugt. Beispielsweise kann das k-clock-Signal durch die Nulldurchgänge des Interferenzsignals in dem Interferometer 44 bestimmt werden. Ein nicht-linearer Verlauf des Wellenlängen-Sweeps der Lichtquelle 12 wird dadurch automatisch ausgeglichen.

Generell ist man bestrebt, die Geschwindigkeit der Tiefenscans zu erhöhen. Da bei der Swept-Source-OCT ein Tiefenscan einem Wellenlängen-Sweep entspricht, bedeutet dies, dass die Frequenz f_{sweep} erhöht werden muss. Zu diesem Zweck haben die vorliegenden Erfinder einen abstimmbaren Fabry-Perot-Filter vorgeschlagen, der Sweep-Frequenzen von mehreren Hundert kHz und bis in den MHz Bereich gestattet. Bei der Verwendung eines solchen Fabry-Perot-Filters wird die Wellenlänge typischerweise annähernd sinusförmig moduliert, für den Wellenlängen-Sweep jedoch bevorzugt der Teil verwendet, in dem sich die Wellenlänge zumindest näherungsweise linear mit der Zeit ändert. Um Totzeiten zu vermeiden werden im Stand der Technik bereits sogenannte gepufferte abstimmbare Lichtquellen verwendet, bei denen nur ein möglichst linearer Ausschnitt aus dem gesamten Wellenlängen-Sweep verwendet wird, der dann optisch in eine Mehrzahl (z.B. 2, 4 oder 8) Wellenlängen-Sweeps aufgespalten wird, die zeitlich gegeneinander verzögert und wieder zusammengefügt werden. Auf diese Weise wird ein kontinuierliches Sweep-Signal erzeugt, bei dem sich die Wellenlänge rampen- oder sägezahnartig mit der Zeit verändert. Auch durch die Anzahl der gepufferten Wellenlängen-Sweeps lässt sich effektiv die Sweep-Rate erhöhen.

Allerdings haben die Erfinder festgestellt, dass bei zunehmender Sweep-Geschwindigkeit Probleme in der Qualität der OCT-Bilder auftreten können. Dies ist insbesondere dann der Fall, wenn nicht, wie im Zusammenhang mit Fig. 2 beschrieben, jeder Tiefenscan einzeln getriggert wird, sondern wenn ein gesamter Daten-Frame, der aus den Detektionsdaten einer Vielzahl von Wellenlängen-Sweeps besteht, mit einem einzigen Trigger in einem kontinuierlichen Datenstrom erzeugt wird. Dabei kann ein Daten-Frame beispielsweise eine komplette Zeile aus Tiefenschnitten umfassen, beispielsweise aus rund 1000 Tiefenschnitten, die dann zusammen ein zweidimensionales Bild ergeben. Dies bietet sich bei höheren Sweep-Raten f_{sweep} und gepufferten Lichtquellen, also solchen ohne Totzeiten zwischen den Sweeps an, weil damit Probleme durch Trigger-Totzeiten vermieden werden können, die auftauchen, wenn jeder einzelne Tiefenschnitt getriggert würde. Derartige Trigger-Totzeitenergeben sich bei typischen Datenerfassungskarten zwischen dem letzten Sample einer soeben getriggerten Erfassung und dem Scharfstellen auf den nächsten Trigger.

Konkret zeigen sich in der Praxis dabei die folgenden Probleme in der Bildqualität, die unter Bezugnahme auf Fig. 4 und 5 erläutert werden sollen.

Fig. 4 zeigt ein 2D-Frame bestehend aus 1600 Tiefenschnitten am Nagelansatz eines menschlichen Fingernagels. Der gesamte Frame wurde mit einem kontinuierlichen Datenstrom aufgenommen, d.h. nach einem einzigen, "gemeinsamen" Trigger, der in der vorliegenden Offenbarung auch als "Frame-Trigger" bezeichnet wird. Wie in Fig. 4 zu erkennen ist, baut sich in dem Bild von links nach rechts eine gewisse Unschärfe auf.

In Fig. 5 ist ebenfalls ein 2D-Frame gezeigt, der mit einem einzigen Frame-Trigger aufgenommen wurde. Dabei zeigt Fig. 5 einen 2D-Tiefenschnitt der Haut eines menschlichen Fingers. Obwohl die Bildqualität hinsichtlich der eigentlich interessierenden Strukturen hier gut ist, treten störende horizontale Linien im Bild auf.

Obwohl die gebräuchlichste Art der OCT in dem oben beschriebenen tomografischen Verfahren zum Erzeugen von Tiefenschnitten in einer Probe besteht, kann das Grundprinzip der OCT auch für andere Zwecke verwendet werden. Ein Beispiel hierfür ist ein photoakustisches Detektions-System, wie es in dem Artikel *"*Intrasweep Phase-Sensitive Optical Coherence Tomography For Noncontact Optical Photoacoustic Imaging" (Cedric Blatter, Branislav Grajciar, Pu Zou, Wolfgang Wieser, Aart-Jan Verhoef, Robert Huber und Reiner A. Leitgeb, Optics Letters, Vol. 37, Ausgabe 21, pp. 4368-4370 (2012)) beschrieben ist. Vereinfacht dargestellt wird bei einer solchen photoakustischen Detektion mit einem Lichtpuls eine Schockwelle in einer Probe, beispielsweise in einem Gewebe, ausgelöst. Diese Schockwelle könnte dann ähnlich wie im Ultraschallverfahren mit entsprechenden "Mikrofonen" detektiert werden. Es ist aber auch möglich, für die Detektion der Schockwelle die OCT zu verwenden, in dem man mithilfe der OCT die Bewegung der Probenoberfläche - also als Resultat der Schockwelle im Gewebe - detektiert. Der Detektionsaufbau ist ähnlich wie bei den bekannten OCT-Systemen für Tiefenscans, jedoch wertet man die aufgenommenen Daten anders aus, da die Bewegung der Oberfläche so schnell ist, dass mehrere Oszillationen pro Frequenz-Sweep auftreten. Anders als bei der herkömmlichen Version der OCT wird hier nur die Oberfläche, genauer die Bewegung der Oberfläche detektiert, aber keine Tiefeninformation.

Die US 2006/0279742 offenbart ein OCT-System mit einer durchstimmbaren Lichtquelle, die einen optischen Halbleiterverstärker als Gain-Medium und einen Polygonspiegelfilter umfasst. Der Polygonspiegelfilter enthält einen Polygonspiegel, ein Teleskop, ein Beugungsgitter und einen Faserkollimator. Wenn sich der Polygonspiegel dreht, wird die Wellenlänge, die vom Polygonfilter reflektiert wird, durchgestimmt. Gemäß einer Ausführungsform wird die Drehgeschwindigkeit des Polgyonspiegels durch die Frequenz eines Signals bestimmt, welches einem Polgyonspiegeltreiber zur Verfügung gestellt wird. Dabei kann dieses Signal von der selben Taktquelle stammen, wie das Taktsignal, das von einer Detektionseinreichtung verwendet wird. Ferner wird jeder Tiefenscan einzeln optisch getriggert. Zu diesem Zweck wird ein Faser-Bragg-Gitter verwendet, welches schmalbandig bei einer diskreten Wellenlänge innerhalb des durchstimmbaren Bereichs der durchstimmbaren Lichtquelle reflektiert. Wenn die Lichtquelle diese Reflektions-Wellenlänge passiert, wird ein reflektierter optischer Puls erzeugt. Dieser Puls wird durch einen Fotoempfänger empfangen und durch einen TTL-Pulsgenerator in einen TTL-Puls umgewandelt. Der TTL-Puls wird dann als Triggersignal für die Datenerfassungselektronik verwendet.

Beispiele von OCT-Systemen, die sich einer optischen k-Clock bedienen, sind in US 2009/046295 A1 und MARINKO V. SARUNIC ET AL: "Instantaneous complex conjugate resolved spectral domain and swept-source OCT using 3x3 fiber couplers", OPTICS EXPRESS, Bd. 13, Nr. 3, 1. Januar 2005 (2005-01-01), Seite 957, XP55069507, ISSN: 1094-4087, DOI: 10.136410PEX.13.000957 gezeigt.

### ZUSAMMENFASSUNG DER ERFINDUNG

Der Erfindung liegt die Aufgabe zugrunde, ein Swept-Source-OCT-System und ein Swept-Source-OCT-Verfahren anzugeben, das die Verwendung hoher Wellenlängen-Sweep-Raten bei guter Bildqualität erlaubt.

Diese Aufgabe wird durch ein Swept-Source-OCT-System nach Anspruch 1 und ein Swept-Source-OCT-Verfahren nach Anspruch 13 gelöst. Vorteilhafte Weiterbildungen sind in den abhängigen Ansprüchen angegeben.

Die Erfinder haben festgestellt, dass sich Unschärfe-Probleme wie in Fig. 4 gezeigt oder Probleme mit störenden Artefakten, wie sie in Fig. 5 zu sehen sind, überraschenderweise dadurch wesentlich verringern lassen können, dass das Sweep-Steuerungssignal und das Detektions-Taktsignal phasengelockt sind.

Die Erfinder haben ferner festgestellt, dass bereits sehr geringe Variationen in dem Verhältnis von f_{scan} und fₛₐₘₚ zu überraschend großen Unschärfeproblemen von der Art führen, wie sie in Fig. 4 zu erkennen sind. Dies ist insbesondere dann der Fall, wenn - wie im OCT-Bild von Fig. 4 - ein gesamter 2D-Frame mit einem einzigen Frame-Trigger aufgezeichnet wird. Bei einem Frame wie in Fig. 4 mit 1600 Tiefenschnitten und beispielsweise 1000 Sampeln pro Tiefenschnitt würde eine Änderung von fₛₐₘₚ gegenüber f_{sweep}um lediglich 1 ppm dazu führen, dass das erste Sample beim letzten Tiefenschnitt des Frames bereits um 1,6 Samples falsch liegt. Dadurch verschiebt sich die Phasenlage beim Resampling, wodurch das 2D-Bild von Fig. 4 entlang der Scan-Richtung zunehmend unschärfer wird. Derartig kleine Schwankungen in dem Verhältnis von f_{sweep} und fₛₐₘₚ lassen sich jedoch nur schwer vermeiden, und es ist zunächst überraschend, dass sie derartig große Auswirkungen auf die Bildqualität haben. Neben der Unschärfe können auch Artefakte auftreten, wie dies bei dem Bild von Fig. 5 der Fall ist. Offensichtlich sind diese Artefakte dadurch verursacht, dass es ohne feste Phasenbeziehung zwischen dem Sweep-Steuerungssignal und dem Detektions-Taktsignal zu einer Verschiebung von einem aufgenommenen Hintergrund gegenüber den tatsächlich gemessenen Daten kommt, so dass ein spektral scharfkantiger Hintergrund (z.B. Wasser-Absorptionslinien im Interferometer) nicht mehr korrekt abgezogen wird und störende (in der Praxis zumeist "flackernde") Bildstreifen erzeugt werden, wie sie in Fig. 5 zu erkennen sind. Wie unten demonstriert wird, können auch diese Probleme durch die feste Phasenbeziehung zwischen dem Sweep-Steuerungssignal und dem Detektions-Taktsignal überwunden werden. Man beachte, dass der Begriff "phasengelockt" in der vorliegenden Offenbarung zwar eine feste Phasenbeziehung fordert, aber nicht notwendigerweise bedeutet, dass die betreffenden Signale in einem ganzzahligen Frequenzverhältnis stehen.

Man beachte, dass im Rahmen der vorliegenden Erfindung eine feste Phasenbeziehung zwischen dem Sweep-Steuerungssignal und dem Detektions-Taktsignal hergestellt wird, also zwischen zwei elektrischen Signalen. Der naheliegende Weg, eine feste Phasenbeziehung zwischen dem Wellenlängen-Sweep und der Datenabtastung herzustellen, bestünde darin, das Detektions-Taktsignal von dem optischen Signal abzuleiten, wie dies bei der k-clock von Fig. 3 bereits der Fall ist. Denn obwohl ein Datensampling mit k-clock, wie in Fig. 3 gezeigt, vornehmlich verwendet wird, um ein Resampling zu vermeiden, ist auch hier der Wellenlängen-Sweep und die Abtastung des Interferenzsignals bereits intrinsisch phasengelockt.

Die Erfinder sind den Weg über eine optisch erzeugte k-clock jedoch bewusst nicht gegangen, sondern haben einem Phasen-Locking der elektrischen Signale den Vorzug gegeben. Der Grund hierfür liegt wiederum in dem Bestreben, mit einem möglichst schnellen Wellenlängen-Scan zu arbeiten. Denn die k-clock-Frequenz muss aufgrund des Nyquist-Theorems stets größer sein als die höchste HF-Frequenz in dem Interferenzsignal. Aufgrund der begrenzten Kohärenzlänge der abstimmbaren Lichtquelle, die mit zunehmender Sweep-Rate f_{sweep} abnimmt, nimmt jedoch der Phasen-Jitter im Interferenzsignal zu. Mit einer Bandpassfilterung des k-clock-Signals kann dieses Problem abgeschwächt, aber nicht beseitigt werden. Der Phasen-Jitter auf dem Taktsignal übersetzt sich direkt in einen Phasen-Jitter in den aufgenommenen Samples. Dies führt zu einer Verschlechterung des Signal-Rauschabstandes und zu einem unscharfen Bild.

Die Abnahme der Kohärenz bei höheren Sweep-Raten f_{sweep} macht den OCT-Scan in größeren Tiefen grundsätzlich schwieriger. Gleichwohl hat es sich gezeigt, dass man mit OCT (aber ohne k-clock) durchaus noch in Tiefen abbilden kann, bei denen die Interferenzfähigkeit um mehr als 10 dB abgenommen hat, also bis weit über die Kohärenzlänge hinaus. Oft ist also die verringerte Kohärenzlänge, die sich aus einer höheren Sweep-Rate f_{sweep} ergibt, für die OCT-Tiefenscans weniger beschränkend, als man zunächst annehmen könnte. Jedoch tritt bei der Verwendung einer k-clock das oben beschriebene weitere Problem auf, dass mit abnehmender Kohärenz der Phasen-Jitter im Interferenzsignal zunimmt, der dann wiederum das Sampeln von hohen Frequenzen im Interferenzsignal ungenau macht. Wie eingangs erwähnt, sind jedoch gerade die hohen Frequenzen im Interferenzsignal für größere Tiefen repräsentativ. Daher lassen sich im Rahmen der Erfindung, bei der die feste Phasenbeziehung zwischen den elektrischen Signalen und nicht über eine k-clock hergestellt wird, bei höheren Sweep-Raten f_{sweep} größere Tiefen scannen, als dies bei Verwendung einer k-clock möglich wäre.

Bei der vorstehend beschriebenen Ausführungsform der Erfindung sind das Sweep-Steuerungssignal und das Detektions-Taktsignal im physikalischen Sinne phasengelockt. Es ist jedoch auch möglich, einen ähnlichen Effekt bezüglich der Verbesserung der Bildqualität zu erzielen, wenn die Signale zwar selbst nicht im strengen Sinne phasengelockt sind, gleichwohl aber ihr Frequenzverhältnis und ihre relative Phasenlage präzise bekannt sind. In diesem Fall ist es möglich, die detektierten Daten, unter Einbeziehung dieser Information, präzise mit dem Wellenlängen-Sweep in Beziehung zu setzen. Anschaulich gesprochen kann auf diese Weise ein Phasen-Locking durch nachträgliche Bearbeitung der Daten, die üblicherweise als "Resampling" bezeichnet wird, hergestellt werden, wobei das Phasen-Locking nicht in Hardware, sondern in Software, nämlich der Datenverarbeitungs-Software, hergestellt wird. Zu diesem Zweck sind gemäß einer anderen Ausführungsform der Erfindung Mittel zum Erzeugen eines Signals oder einer Signalfolge vorgesehen, das bzw. die kennzeichnend für das Frequenzverhältnis und/oder die relative Phasenlage des Sweep-Steuerungssignales und des Detektions-Taktsignales ist bzw. sind.

Insbesondere können diese Mittel folgendes umfassen:
- Mittel zum Erzeugen eines mit dem Sweep-Steuerungssignal phasengelockten Referenzsignals, insbesondere Pulssignals, oder eine Folge von derartigen Referenzsignalen, und
- Mittel zum Einkoppeln des Referenzsignals oder der Folge von Referenzsignalen in den Eingang der Detektionseinrichtung.

Indem das phasengelockte Referenzsignal mit der Detektionseinrichtung, d. h. mithilfe des Detektions-Taktsignales detektiert wird, ergibt sich im Ergebnis ein Signal, das kennzeichnend für die relative Phasenlage zwischen dem Detektions-Taktsignal und dem Referenzsignal, und mithin dem Sweep-Steuerungssignal ist.

Ferner sind vorzugsweise Mittel vorgesehen, um aus dem mithilfe des Detektions-Taktsignales detektierten Referenzsignal oder der Referenzsignalfolge das Frequenzverhältnis und/oder die relative Phasenlage zwischen dem Sweep-Steuerungssignal und dem Detektions-Taktsignal zu ermitteln.

Vorzugsweise ist die Detektionseinrichtung geeignet, das Interferenzsignal mit dem Takt des Detektions-Taktsignals abzutasten. Dabei umfasst die Detektionseinrichtung vorzugsweise einen AD-Wandler, der geeignet ist, das Detektions-Taktsignal zu empfangen und das Interferenzsignal zu Zeitpunkten, die durch das Detektions-Taktsignal definiert sind, in digitale Daten umzusetzen.

Vorzugsweise beträgt die Repetitionsrate f_{sweep} der abstimmbaren Lichtquelle mindestens 50 kHz, besonders vorzugsweise mindestens 350 kHz und insbesondere mindestens 1,4 MHz.

Erfindungsgemäß ist die abstimmbare Lichtquelle eine gepufferte Lichtquelle, mit der aufeinanderfolgende Wellenlängen-Sweeps im wesentlichen ohne zeitliche Lücke erzeugt werden können, und ist das Swept-Source-OCT-System dazu eingerichtet, einen Daten-Frame, bestehend aus den Detektionsdaten einer Vielzahl von Wellenlängen-Sweeps oder ein Daten-Volumen, bestehend aus einer Vielzahl von Daten-Frames, in einem kontinuierlichen Datenstrom zu erzeugen. Hierbei soll die Angabe "im wesentlichen" ohne zeitliche Lücke Fälle einschließen, bei denen überhaupt keine zeitliche Lücke vorliegt, aber auch noch Fälle mit nur geringen zeitlichen Lücken, insbesondere solche die weniger als 10% der Gesamtzeit des Betriebes ausmachen. Hierbei wird also nicht die Datenerfassung für jeden einzelnen Tiefenscan, der auch als "A-Scan" bezeichnet wird, getriggert, sondern ein einziger Trigger wird für mehrere Tiefenschnitte, den gesamten Daten-Frame oder sogar ein ganzes Daten-Volumen verwendet. Hierbei bezeichnet ein "Daten-Frame" einen zweidimensionalen Tiefenschnitt. Ein Datenvolumen kann durch eine Mehrzahl von Frames gebildet werden, beispielsweise durch eine Vielzahl von benachbarten zweidimensionalen Tiefenschnitten. Ein Datenvolumen kann aber beispielsweise auch mithilfe eines Spiral-Scans erzeugt werden, wie er zum Beispiel bei der intravaskulären OCT verwendet werden könnte. Auch ein solcher Spiral-Scan erzeugt ein Daten-"Volumen", weil er letztlich dreidimensionale Informationen über die Probe liefert. Wenn ein Daten-Frame (oder - Volumen) in einem kontinuierlichen Datenstrom, d. h. ohne separaten Trigger für jeden A-Scan erzeugt wird, lässt sich wie eingangs erwähnt eine Totzeit zwischen dem letzten Sample einer soeben getriggerten Erfassung und dem Scharfstellen auf den nächsten Trigger innerhalb des Frames bzw. des Volumens vermeiden. Gleichwohl bringt dieses frame- bzw. volumenweise Sampeln mit nur jeweils einem Trigger weitere Schwierigkeiten mit sich, wenn die Repetitionsrate f_{sweep} des Wellenlängen-Sweeps und die Abtastrate fₛₐₘₚ gegeneinander fluktuieren oder driften. Genau dieses Problem wird jedoch durch das Phasen-Locking des Sweep-Steuerungssignals und des Detektions-Taktsignals im Rahmen der vorliegenden Erfindung gelöst.

Vorzugsweise umfasst das System ferner eine Scan-Einrichtung, mit der der Probenstrahl über eine Probe gescannt werden kann, wobei die Scan-Einrichtung durch ein Scansignal angesteuert wird, das mit dem Sweep-Steuerungssignal phasengelockt ist. Derartige Scan-Einrichtungen können beispielsweise Ablenkspiegel umfassen, die mit galvanometrischen Motoren, sogenannten "Galvos", betrieben werden. Andere Beispiele sind Spiral-Scan-Katheter, die für intravaskuläre OCT geeignet sind, oder Polygon-Scanner. Resonante Scanner erlauben oftmals hohe Scangeschwindigkeiten, haben aber dafür oft nur einen relativ engen Resonanzbereich, was beim Phasen-Locking berücksichtigt werden muss. Dies kann dazu führen, dass die Frequenz des Sweep-Steuerungssignals und des Scansignals nicht notwendigerweise in einem ganzzahligen Verhältnis stehen, was jedoch für die Zwecke des Phasen-Lockings auch nicht unbedingt erforderlich ist. Bei schnellen OCT-Systemen wird oft der Abbildungsstrahl so schnell über die Probe bewegt, dass sich der Strahl pro Tiefenschnitt um etwa einen Strahldurchmesser weiterbewegt. Wenn also der Scanner nicht phasengelockt ist, dann kann der Start der Scan-Phasen nur auf ± 1 Sweep der abstimmbaren Lichtquelle genau bestimmt werden, so dass die Position des ersten Tiefenschnitts in Scan-Richtung nicht genau festliegt, sondern mit einer gewissen Unsicherheit behaftet ist. In einem 3D-Scan kann dies zu "Reißverschluss-Artefakten" führen, speziell wenn das Bild Strukturen aufweist, die senkrecht zur schnellen Scanrichtung liegen. Ferner werden dadurch die OCT-Datensätze besser reproduzierbar. Dies ist insbesondere im Hinblick auf Mittelungsverfahren, beispielsweise das sogenannte "Volume Averaging" von Vorteil, um ein "Ausschmieren" des gemittelten Bildes zu verhindern.

In einer vorteilhaften Weiterbildung umfasst das Swept-Source-OCT-System eine Synchronisationseinheit, die dazu eingerichtet ist, ein Daten-Frame-Startsignal oder ein Daten-Volumen-Startsignal zu erzeugen, das mit der Scaneinrichtung oder mit dem Scansignal synchronisiert und mit dem Sweep-Steuerungssignal phasengelockt ist. Diese Synchronisationseinheit kann beispielsweise das Daten-Frame-Startsignal oder das Daten-Volumen-Startsignal zu einem Zeitpunkt erzeugen, an dem die Scaneinrichtung gerade an der richtigen Stelle steht. Da dieses Signal weiter mit dem Sweep-Steuersignal phasengelockt ist, kann ein zusätzlicher Trigger-Jitter vermieden werden. Wenn eine gepufferte abstimmbare Lichtquelle verwendet wird, ist es von Vorteil, den Frame- oder Volumen-Start auf einen speziellen Sweep zu synchronisieren, z.B. den primären, den ersten gepufferten Sweep usw., wodurch das Resampling und die Subtraktion des Hintergrunds vereinfacht werden.

In einer vorteilhaften Weiterbildung umfasst das Swept-Source-OCT-System ferner eine Einrichtung zum Regeln bzw. Nachregeln des Sweep-Steuerungssignals im Betrieb des Systems derart, dass die Kohärenzeigenschaften der Lichtquelle gegenüber Umwelteinflüssen stabilisiert werden. Dies ist insbesondere nützlich, wenn für die abstimmbare Lichtquelle ein Fourier Domain Mode Locking (FDML) Laser verwendet wird, wie er beispielsweise in R. Huber, M. Wojtkowski, und J.G. Fujimoto, "Fourrier Domain Mode Locking (FDML): A New Laser Operating Regime And Applications For Optical Coherence Tomography", Optics Express, 2006, 14 (8): p. 3225-3237 beschrieben ist. Ein FDML-Laser umfasst typischerweise einen optischen Halbleiterverstärker als Lichtquelle in einem Resonator, einen Fabry-Perot-Filter, der als optischer Bandpassfilter dient, und eine Verzögerungsstrecke, die so bemessen ist, dass die Umlaufzeit des Lichtes aus dem Resonator heraus durch die Verzögerungsstrecke und erneut in den Resonator hinein ein ganzzahliges Vielfaches der Sweep-Periode des Filters beträgt. Ein Teil des umlaufenden Laserlichts wird dann jeweils durch einen Phasenkoppler ausgekoppelt. Die Verzögerungsstrecke wird durch eine entsprechend lange Glasfaserspule gebildet. Durch Umwelteinflüsse, beispielsweise Temperaturschwankungen, kann sich jedoch die optische Weglänge und damit die Verzögerungszeit verändern, so dass die Umlaufzeit und die Zeit für den Wellenlängen-Sweep nicht mehr exakt übereinstimmen, was zu einer verringerten Kohärenz führen kann. In diesem Fall ist es vorteilhaft, wenn die genannte Einrichtung zum Regeln des Sweep-Steuerungssignals vorgesehen ist, die das Sweep-Steuerungssignal und dadurch die Sweep-Frequenz entsprechend nachregelt, um die Kohärenz stabil zu halten. Da das Detektions-Taktsignal erfindungsgemäß mit dem Sweep-Steuerungssignal phasengelockt ist, ist dies ohne weitere Modifikation der Detektionseinrichtung möglich.

Erfindungsgemäß wird die feste Phasenbeziehung zwischen dem Sweep-Steuerungssignal und dem Detektions-Taktsignal dadurch hergestellt, dass Mittel vorgesehen sind, um eines der Signale aus dem anderen abzuleiten, oder um beide Signale aus einem gemeinsamen Ursprungssignal abzuleiten.

Vorzugsweise können hierzu Mittel vorgesehen sein, um die feste Phasenbeziehung auf eine oder eine Kombination aus mehreren der folgenden Arten herzustellen:
- Das Detektions-Taktsignal wird mithilfe eines Phase-Locked-Loop (PLL) aus dem Sweep-Steuerungssignal erzeugt, wobei die Frequenz des Detektions-Taktsignals vorzugsweise ein Vielfaches, insbesondere (aber nicht notwendigerweise ein ganzzahliges) Vielfaches der Frequenz des Sweep-Steuerungssignals beträgt,
- aus einem Signal, dessen Frequenz ein Vielfaches der Frequenz des Sweep-Steuerungssignals beträgt, wird das Sweep-Steuerungssignal durch Frequenzteilung und das Detektions-Taktsignal durch Frequenzmultiplikation mithilfe eines PLL erzeugt, oder
- aus dem Detektions-Taktsignal wird das Sweep-Steuerungssignal durch Frequenzteilung abgeleitet.

Grundsätzlich sind alle drei Arten möglich, jedoch unterscheiden sich die Sweep-Rate f_{sweep} und die Datenerfassungsrate fₛₐₘₚ typischerweise um ein Faktor > 1000, wodurch es technisch anspruchsvoll ist, das wesentlich schnellere Daten-Taktsignal mit einem PLL aus dem Sweep-Steuerungssignal abzuleiten. Stattdessen ist die zweite genannte Variante besonders bevorzugt, bei der sowohl das Sweep-Steuerungssignal als auch das Detektions-Taktsignal aus einem gemeinsamen Signal abgeleitet werden, dessen Frequenz zwischen f_{sweep} und fₛₐₘₚ liegt.

In einer anderen Weiterbildung umfasst das Swept-Source-OCT-System eine k-clock-Erzeugungseinrichtung zum elektronischen, insbesondere digitalen Erzeugen einer k-clock, basierend auf einem Eingangssignal, welches mit dem Sweep-Steuerungssignal phasengelockt ist. Dabei dient das elektronisch bzw. "künstlich" erzeugte k-clock-Signal als Detektions-Taktsignal für die Detektionseinrichtung.

Anders als im Stand der Technik üblich, wird hierbei die k-clock nicht aus dem optischen Signal abgeleitet, sondern "künstlich", beispielsweise vollständig digital erzeugt, und zwar basierend auf einem Eingangssignal, das mit dem Sweep-Steuerungssignal phasengelockt ist. Der Begriff "künstlich erzeugt" soll dabei lediglich zum Ausdruck bringen, dass es sich nicht um ein aus dem optischen Signal unmittelbar abgeleitetes Signal handelt. Obwohl das künstlich bzw. elektronisch erzeugte k-clock-Signal aus Taktflanken mit zeitlich variablen Abständen besteht, ist es gleichwohl im Sprachgebrauch der vorliegenden Offenbarung als mit dem Sweep-Steuerungssignal phasengelockt anzusehen, weil das Eingangssignal der k-clock-Erzeugungseinrichtung mit dem Sweep-Steuerungssignal phasengelockt ist. Der zeitliche Verlauf der digital erzeugten k-clock ist wiederum bevorzugt so gewählt, dass die durch das k-clock-Signal vermittelten Abtastpunkte zumindest näherungsweise äquidistant in der optischen Frequenz des Interferenzsignals sind, um ein Resampling zu erübrigen.

In einer vorteilhaften Ausführungsform umfasst die k-clock-Erzeugungseinrichtung einen Synthesizer, der verbunden ist, um das mit dem Sweep-Steuerungssignal phasengelockte Eingangssignal zu empfangen und geeignet ist, das k-clock-Signal, insbesondere digital, zu erzeugen, wobei der Synthesizer vorzugsweise eine oder mehrere der folgenden Komponenten umfasst: einen FPGA oder einen ASIC, der das mit dem Sweep-Steuerungssignal phasengelockte Eingangssignal empfängt und daraus das k-clock-Signal oder ein Vorläufersignal desselben erzeugt, einen DDS, der das mit dem Sweep-Steuerungssignal phasengelockte Eingangssignal empfängt und mit einem ASIC oder FPGA verbunden ist, um aus diesem Frequenzinformation zur Erzeugung der k-clock zu erhalten, einen Mixer, der dazu eingerichtet ist, das mit dem Sweep-Steuerungssignal phasengelockte Eingangssignal mit einem Signal variabler Frequenz zu mischen, um das k-clock-Signal oder einen Vorläufer desselben zu erzeugen, und/oder einen Tiefpassfilter im Bereich des Ausgangs des Synthesizers.

In einer vorteilhaften Weiterbildung umfasst das Swept-Source-OCT-System einen Speicher, in dem Daten zu Rekalibrierung oder zum Resampling des detektierten Interferenzsignals herstellerseitig gespeichert sind. Diese Daten können insbesondere Zeitpunkte für Stützstellen enthalten, an denen das Interferenzsignal durch Interpolation des mithilfe der Detektionseinrichtung unter dem Detektions-Taktsignal gemessenen Interferenzsignals zu ermitteln ist, wobei die Zeitpunkte so gewählt sind, dass die Abtastpunkte äquidistant in der optischen Frequenz des Interferenzsignals sind. Es können aber auch andere Daten zur Rekalibrierung oder zum Resampling verwendet werden, und die Daten werden in Form von Kennkurven, Lookup Tables oder dergleichen gespeichert. Aufgrund der festen Phasenbeziehung zwischen dem Sweep-Steuerungssignal und dem Detektions-Taktsignal kann es, jedenfalls wenn FDML-Laser als abstimmbare Lichtquelle verwendet werden, ausreichen, die Daten zur Rekalibrierung oder zum Resampling einmalig zu ermitteln und dann herstellerseitig zu speichern. Ein zusätzliches Interferometer zur Ermittlung dieser Daten wird für jedes einzelne Gerät dann nicht mehr benötigt. Man beachte, dass sich z. B. bei Verwendung eines FDML-Lasers als abstimmbare Lichtquelle die Anzahl der freien Spektralbereiche des zugehörigen Wellenlängenfilters, beispielsweise durch Temperaturschwankungen, ändern kann. In diesem Fall umfassen die Daten zur Rekalibrierung oder zum Resampling vorzugsweise jeweils einen zugehörigen Datensatz für die entsprechende Anzahl von freien Spektralbereichen. Auch kann gegebenenfalls ein Datensatz bzw. eine Kennkurve pro Pufferstufe benötigt werden. Die Gesamtheit solcher Datensätze wird in der vorliegenden Offenbarung als "Daten zur Rekalibrierung oder zum Resampling" bezeichnet.

Bei MEMS-basierten Quellen, beispielsweise VCSEL-Quellen ist, anders als beim FDML-Laser, zumindest im Betrieb außerhalb der mechanischen Resonanz des Frequenzfilters jeder Sweep etwas anders, so dass die einmalige Speicherung der Daten zur Rekalibrierung oder zum Resampling nicht notwendigerweise ausreichen wird. Aus diesem Grund wird derzeit bei OCT-Systemen mit einem VCSEL als abstimmbare Lichtquelle regelmäßig eine optisch erzeugte k-clock verwendet. Dies ist aber aus den oben genannten Gründen im Hinblick auf höhere Sweep-Raten nachteilig. Stattdessen wird hier für Fälle, bei denen die einzelnen Wellenlängen-Sweeps nicht vollständig konsistent sind und daher keine einmalig gespeicherten Daten zur Rekalibrierung oder zum Resampling zur Anwendung kommen können, vorgeschlagen, ein zusätzliches Interferometer vorzusehen, dass dazu eingerichtet ist, während des Betriebs des Systems ein weiteres Interferenzsignal zu erzeugen. Ferner ist eine Einrichtung zur Detektion des weiteren Interferenzsignals und zur Berechnung von Daten zur Rekalibrierung oder zum Resampling aus dem detektierten weiteren Interferenzsignal vorgesehen. Es wird also auch in dieser Ausführungsform keine optische k-clock verwendet, sondern es wird weiterhin mit rein digital erzeugten Daten abgetastet und nachträglich resampelt. Jedoch werden die für die Rekalibrierung oder das Resampling benötigten Daten unter Verwendung des detektierten weiteren Interferenzsignals angepasst. Die Variationen zwischen den Wellenlängen-Sweeps können aus dem detektierten weiteren Interferenzsignal abgeleitet werden und in den Daten zur Rekalibrierung oder zum Resampling berücksichtigt werden.

### KURZE BESCHREIBUNG DER FIGUREN

Weitere Vorteile und Merkmale der Erfindung ergeben sich aus der folgenden Beschreibung, in der die Erfindung anhand von bevorzugten Ausführungsbeispielen unter Bezugnahme auf die beigefügten Zeichnungen näher erläutert wird. Darin zeigen
- Fig. 1: eine schematische Darstellung eines Swept-Source-OCT-Systems,
- Fig. 2: ein schematisches Blockdiagramm eines konventionellen Swept-Source-OCT-Systems, bei dem unabhängige Oszillatoren zur Erzeugung eines Sweep-Steuerungssignals und eines Detektions-Taktsignals verwendet werden,
- Fig. 3: eine schematische Darstellung eines konventionellen Swept-Source-OCT-Systems, bei dem das Detektions-Taktsignal durch eine optisch erzeugte k-clock gebildet ist,
- Fig. 4: einen 2D-Tiefenschnitt eines Fingernagels, aufgezeichnet mit Frame-Trigger und ohne phasengelocktes Detektions-Taktsignal,
- Fig. 5: einen 2D-Tiefenschnitt durch die Haut eines menschlichen Fingers, aufgezeichnet mit Frame-Trigger und ohne phasengelocktes Detektions-Taktsignal,
- Fig. 6a: eine schematische Darstellung eines erfindungsgemäßen Swept-Source-OCT-Systems mit phasengelocktem Detektions-Taktsignal,
- Fig. 6b: ein alternatives erfindungsgemäßes Swept-Source-OCT-System mit phasengelocktem Detektions-Taktsignal,
- Fig. 7: ein Schaltungsaufbau zum Erzeugen eines Sweep-Steuerungssignales, eines Detektions-Taktsignales und eines Scan-Steuerungssignales, die jeweils phasengelockt sind,
- Fig. 8: in der rechten Bildhälfte den OCT-Schnitt von Fig. 5 und in der linken Bildhälfte den entsprechenden Schnitt bei Verwendung des phasengelockten Detektions-Taktsignals,
- Fig. 9: unten das OCT-Bild von Fig. 4, bei dem fₛₐₘₚ um 1 Hz von dem Sollwert abweicht, in der Mitte ein entsprechendes Bild, für den Fall, dass fₛₐₘₚ um 0,3 Hz von dem Sollwert abweicht, und oben ein entsprechendes Bild mit phasengelocktem Detektions-Taktsignal,
- Fig.10: drei OCT-Bilder ohne Probe, oben mit phasengelocktem Detektions-Taktsignal, in der Mitte ohne Phasenlocking, aber mit optimal eingestellter Frequenz des Detektions-Taktsignals, und unten ohne Phasenlocking und mit einer Frequenzdrift in dem Detektions-Taktsignal um 0,05 Hz,
- Fig. 11a-e: eine schematische Darstellung einer Einrichtung zum digitalen Erzeugen einer k-clock,
- Fig. 12a-b: eine Anordnung zum Erzeugen und Einkoppeln eines Startpulses in die Detektionseinrichtung, und
- Fig. 12c: eine schematische Darstellung des Startpulses und eines Teils des Interferenzsignals, die am Eingang der Detektionseinrichtung anliegen.

### BESCHREIBUNG DER BEVORZUGTEN AUSFÜHRUNGSFORMEN

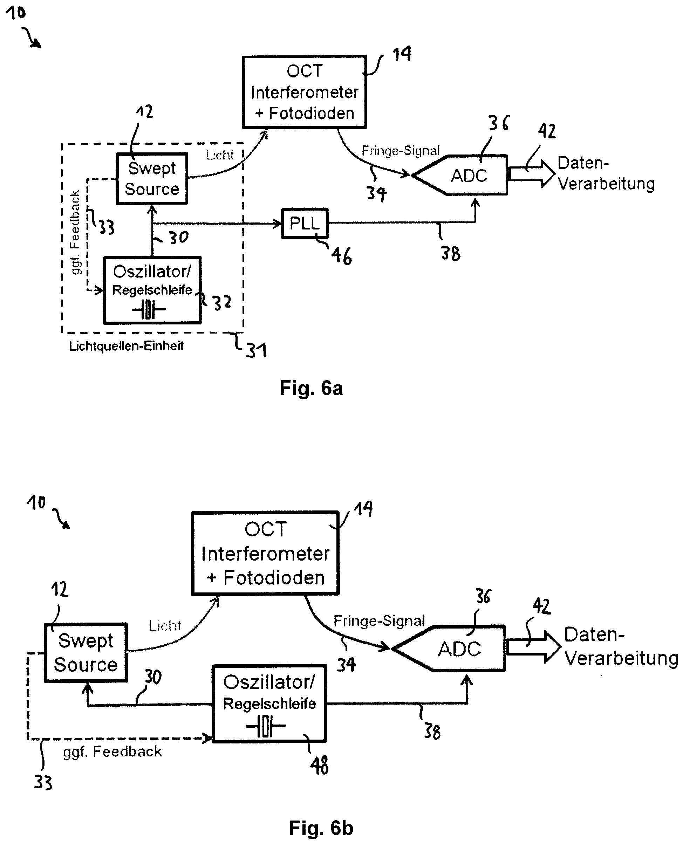

Fig. 6a zeigt den schematischen Aufbau eines Swept-Source-OCT-Systems 10 nach der Erfindung. Das Swept-Source-OCT-System besteht im Wesentlichen aus denselben Komponenten, wie das System von Fig. 2, die nicht erneut beschrieben werden und mit denselben Bezugszeichen bezeichnet sind. Der wesentliche Unterschied besteht darin, dass ein Phase-Locked-Loop (PLL) 46 vorgesehen ist, mit dem aus dem Sweep-Steuerungssignal 30 ein Detektions-Taktsignal 38 abgeleitet wird, welches ein Vielfaches der Frequenz des Sweep-Steuerungssignals 30 aufweist und mit diesem phasengelockt ist. Beispielsweise kann das Sweep-Steuerungssignal 30 eine Frequenz von 1 MHz haben, welche der Repetitionsrate f_{sweep} der abstimmbaren Lichtquelle 12 entspricht, während das Detektions-Taktsignal eine Frequenz von 1 GHz haben kann. In diesem Fall wird mithilfe des PLL 46 aus dem Sweep-Steuerungssignal 30 ein phasengelocktes Detektions-Taktsignal 38 abgeleitet, dessen Frequenz um einen Faktor 1000 höher liegt. Dies bedeutet, dass der AD-Wandler 36 das Interferenzsignal 34 aus dem Interferometer 14 mit 1000 Sampeln pro Sweep abtastet.

Eine alternative Variante ist in Fig. 6b gezeigt, bei der ein Referenzoszillator 48 verwendet wird, dessen Frequenz f_{ref} zwischen der Frequenz des Sweep-Steuerungssignals 30, also typischerweise f_{sweep}, und der Frequenz des Detektions-Taktsignals 38, d.h. fₛₐₘₚ liegt. Aus dem Signal des Referenzoszillators 48 können dann durch Frequenzteilung das Sweep-Steuerungssignal 30 und mithilfe eines PLL (in Fig. 6b nicht gezeigt) das Detektions-Taktsignal 38 abgeleitet werden.

Der Vorteil dieser Variante gegenüber derjenigen von Fig. 6a besteht darin, dass nicht ein einziger PLL eine Frequenzvervielfachung um einen Faktor der Größenordnung von 1000 oder, je nach Ausführungsform mehr bewerkstelligen muss, was bei gleichzeitiger Unterdrückung von Phasenrauschen und guter spektraler Reinheit des Signals, technisch anspruchsvoll ist. Wesentliches gemeinsames Merkmal der beiden Varianten ist jedoch, dass das Sweep-Steuerungssignal 30 und das Detektions-Taktsignal 38 in beiden Fällen miteinander phasengelockt sind.

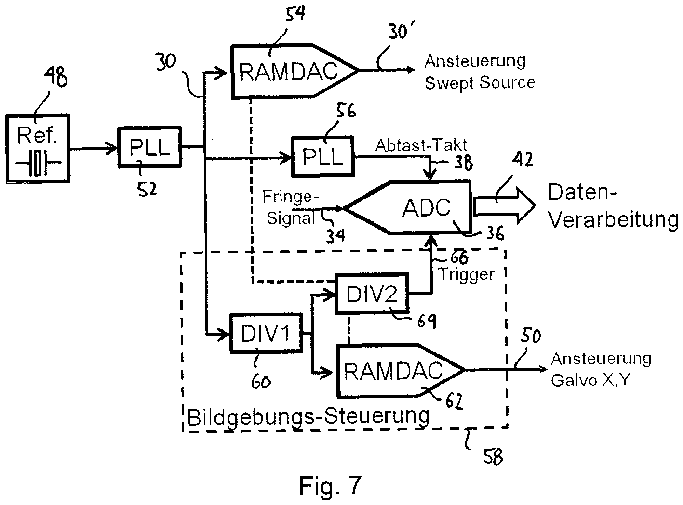

In Fig. 7 ist ein Schaltungsaufbau zum Erzeugen eines Sweep-Steuerungssignales 30, eines Detektions-Taktsignales 38 und eines Scan-Steuerungssignales 50, die jeweils phasengelockt sind, mehr im Detail gezeigt. In diesem Ausführungsbeispiel gehen alle drei Signale 30, 38 und 50 auf einen einzigen Referenz-Oszillator 48 zurück, bei dem es sich beispielsweise um einen 10-MHz-Quarz handeln kann. Alle im Folgenden genannten Frequenzen sind lediglich beispielhaft zu verstehen und dienen ausschließlich der Illustration. In dem Beispiel von Fig. 7 wird das Signal des Referenz-Oszillators 48 mithilfe eines ersten PLL 52 auf eine höhere Frequenz transformiert, beispielsweise auf 100 MHz. Der erste PLL 52 kann beispielsweise ein einstellbarer, fraktioneller PLL sein, sodass seine Ausgangsfrequenz fein einstellbar ist und insbesondere an die abstimmbare Lichtquelle (nicht gezeigt) angepasst werden kann. Das Ausgangssignal des ersten PLL 52 stellt ein Sweep-Steuerungssignal 30 im Sinne der vorliegenden Offenbarung dar, weil es die Frequenz bzw. die Repetitionsrate des Wellenlängen-Sweeps bestimmt. Im gezeigten Ausführungsbeispiel wird das Sweep-Steuerungssignal 30 in einen RAMDAC 54 eingekoppelt. Der RAMDAC 54 hat einen Speicher (RAM), in dem eine Anzahl n Samples gespeichert ist. Diese Samples werden synchron zum Takt des Sweep-Steuerungssignals 30 eines nach dem anderen in einen in dem RAMDAC enthaltenen D/A-Wandler (d. h. "DAC") eingegeben. Im Ausführungsbeispiel von Fig. 7 ist beispielsweise eine Sinus-Schwingung im RAM des RAMDAC 54 gespeichert, und man erhält am Ausgang als Signal 30' einen Sinus mit einer Frequenz, die um einen Faktor 1/*n* geringer ist als das Sweep-Steuerungssignal 30. Beispielsweise kann der Sinus eine Frequenz von 200 kHz haben, mit dem dann der Filter eines FDML-Lasers (nicht gezeigt) als abstimmbare Lichtquelle betrieben wird.

Das Sweep-Steuerungssignal 30 wird ferner in einen zweiten PLL 56 eingekoppelt, mit dem das Detektions-Taktsignal 38, d. h. der "Abtast-Takt", erzeugt wird, der somit phasengelockt mit dem Sweep-Steuerungssignal 30 ist. Beispielsweise kann der zweite PLL 56 die Frequenz des Sweep-Steuerungssignals von ungefähr 100 MHz auf ungefähr 1 GHz erhöhen.

Schließlich enthält die Anordnung von Fig. 7 noch eine Bildgebungssteuerung 58, die durch einen gestrichelten Kasten dargestellt ist. Die Bildgebungssteuerung 58 enthält einen ersten Frequenzteiler 60, der die Frequenz des Sweep-Steuerungssignals 30 auf dieselbe Frequenz herunterteilt, wie der RAMDAC 54, sodass am Ausgang des ersten Teilers 60 die Sweep-Frequenz anliegt. Mit dieser Sweep-Frequenz wird dann ein zweiter RAMDAC 62 angesteuert, der in Antwort darauf das Scan-Steuerungssignal 50 erzeugt, mit dem zwei galvanometrische Motoren (nicht gezeigt) mit Ablenkspiegeln angetrieben werden können. Schließlich wird die Frequenz des ersten Teilers 60 über einen zweiten Teiler 64 nochmals geteilt, um ein Trigger-Signal 66 zu erzeugen, bei dem es sich in dem gezeigten Ausführungsbeispiel um einen Frame-Trigger handelt. Der Frame-Trigger wird einmal pro Scan-Zeile erzeugt, wobei die "Zeile" der Scanrichtung des schnelleren der beiden Galvanometer-Motoren entspricht. Der Frame-Trigger markiert somit den Anfang eines zweidimensionalen Tiefenscans.

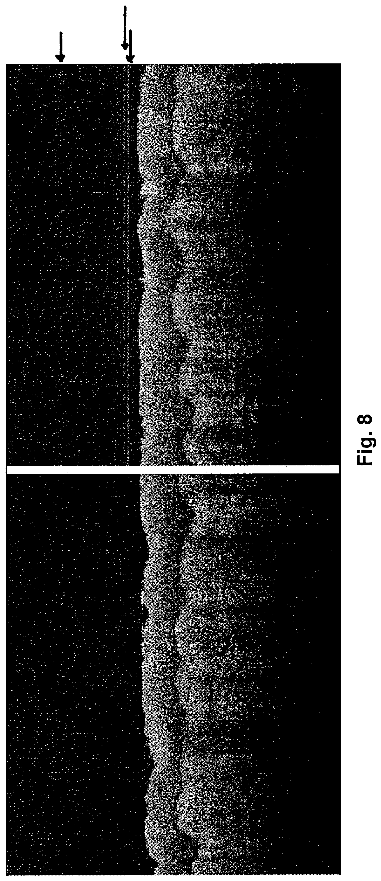

Die Erfinder haben ein Swept-Source-OCT-System nach Fig. 6b und Fig. 7 installiert und überraschenderweise festgestellt, dass sich durch das Phasen-Locking dieser beiden elektrischen Signale die eingangs genannten Fehler in der Bildqualität erstaunlich erfolgreich beheben lassen. Dies wird nachstehend unter Bezugnahme auf Fig. 8 bis 10 mehr im Detail gezeigt.

Fig. 8 zeigt in der rechten Bildhälfte dasselbe OCT-Bild vom menschlichen Finger (Haut), das bereits in Fig. 5 gezeigt wurde. Das Bild wurde mit einem einzigen Frame-Trigger aufgezeichnet. Das bedeutet, dass der gesamte zweidimensionale Frame als kontinuierlicher Datenstrom über 1600 Wellenlängen-Sweeps aufgezeichnet wurde, ohne dass zwischendurch nochmals getriggert wurde. Wie eingangs erläutert entspricht hierbei jeder Wellenlängen-Sweep einem Tiefenschnitt bzw. einer Pixelspalte in Fig. 8, den man im Fachgebiet als "A-Scan" bezeichnet. Der gesamte 2D-Frame besteht also aus 1600 solcher Tiefenschnitte. Bei der Aufnahme des rechten OCT-Bildes von Fig. 8 wurden das Sweep-Steuerungssignal 30 und das Detektions-Taktsignal 38 wie in Fig. 2 gezeigt durch unterschiedliche Oszillatoren erzeugt. Wie eingangs erwähnt, sieht man in dem rechten Bild von Fig. 8 gleichwohl horizontale, durch Pfeile gekennzeichnete Linien, bei denen es sich um Artefakte handelt, die die Bildqualität verschlechtern.

Das linke Bild in Fig. 8 zeigt zum Vergleich ein entsprechendes OCT-Bild, mit dem einzigen Unterschied, dass das Sweep-Steuerungssignal 30 und das Detektions-Taktsignal 38 phasengelockt sind. Wie dem linken Bild der Fig. 8 zu entnehmen ist, verschwinden die horizontalen hellen Linien vollständig.

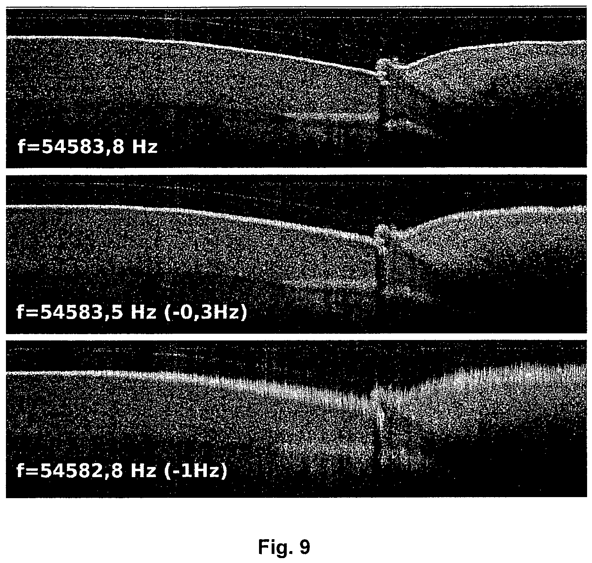

Fig. 9 zeigt ähnliche 2D-OCT-Frames vom menschlichen Fingernagel im Bereich des Nagelansatzes. Die oberste Abbildung wurde mit dem OCT-System der Erfindung aufgenommen, bei dem das Sweep-Steuerungssignal 30 und das Detektions-Taktsignal 38 phasengelockt sind. In diesem Fall betrug die Grund-Sweep-Frequenz der abstimmbaren Lichtquelle 12 54583,8 Hz. Die Bildqualität ist sehr gut.

Die mittlere Abbildung von Fig. 9 zeigt eine entsprechende Aufnahme ohne phasengelocktes Detektions-Taktsignal. Es zeigt sich, dass bereits eine geringe Variation derSweep-Rate gegenüber der Frequenz des Detektions-Taktsignals zu einer deutlichen Verschlechterung der Bildqualität führt. Im mittleren Bild weicht die Grund-Sweep-Frequenz der abstimmbaren Lichtquelle 12 nur um -0,3 Hz von dem Idealwert ab, also in der Größenordnung von wenigen ppm. Dennoch erkennt man bereits hier eine Unschärfe im Bild. Bei einer Abweichung von 1 Hz (untere Abbildung in Fig. 9, entsprechend Fig. 4) ist das Bild bereits in deutlich störender Weise unscharf. Dies zeigt, dass bereits sehr geringe Fluktuationen im Verhältnis der Sweep-Rate f_{sweep} und der Abtast-Rate fₛₐₘₚ im Bereich von wenigen ppm zu ganz erheblichen Bildstörungen führen können. Wie der oberen Abbildung von Fig. 9 zu entnehmen ist, lässt sich dieses Problem durch Verwendung des phasengelockten Detektions-Taktsignals 38 erfolgreich beheben.

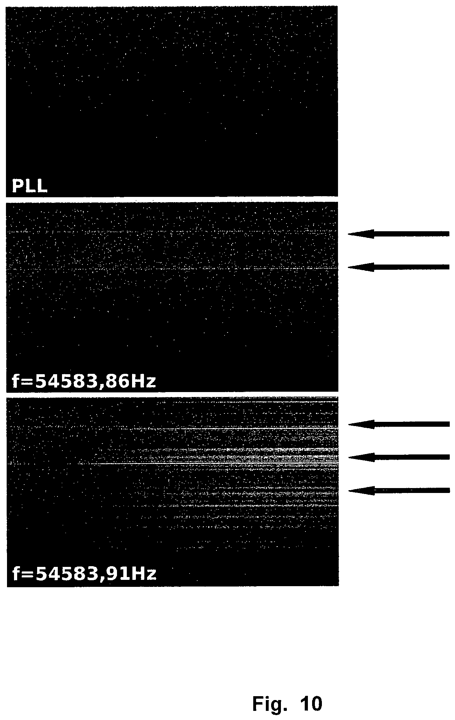

Schließlich zeigt Fig. 10 drei OCT-Bilder ohne Probe, die ebenfalls jeweils in einem kontinuierlichen Datenstrom, auf Grundlage eines einzigen Frame-Triggers erzeugt wurden. In sämtlichen Bildern wurde der Hintergrund, insbesondere die Wasser-Absorptionslinien in der üblichen Weise abgezogen. Auf diese Weise sollte sich ein möglichst homogener schwarzer Hintergrund ergeben.

Das oberste Bild in Fig. 10 ist wiederum mit phasengelocktem Detektions-Taktsignal 38 aufgenommen worden und zeigt in der Tat einen homogenen, schwarzen Hintergrund.

Das mittlere Bild wurde ohne phasengelocktes Detektions-Taktsignal 38 aufgenommen, jedoch bei einer optimalen Einstellung des Frequenzverhältnisses zwischen dem Sweep-Steuerungssignal 30 und dem Detektions-Taktsignal 38. Gleichwohl zeigt das mittlere Bild helle, in der Praxis flackernde Linien, die in Fig. 10 durch die Pfeile gekennzeichnet sind. Diese Linien sind auf einen unvollständig abgezogenen Untergrund zurückzuführen.

Das unterste Bild in Fig. 10 zeigt wiederum ein OCT-Bild ohne Probe, bei dem jedoch die Sweep-Frequenz der abstimmbaren Lichtquelle 12 um einen vergleichsweise geringen Wert von 0,05 Hz gedriftet ist. Trotz dieser sehr geringen Drift sind deutliche Bildstörungen zu sehen, die ebenfalls auf einen unvollständig abgezogenen Hintergrund zurückzuführen sind. Diese Bildstörungen entstehen offenbar dadurch, dass nach dem Frame-Trigger die einzelnen Tiefenschnitte nicht mehr in den richtigen Sample-Positionen auseinander geschnitten werden.

Es zeigt sich somit, dass bereits relativ geringe Abweichungen im Verhältnis der Sweep- und der Abtast-Frequenz zu ganz erheblichen Bildstörungen führen können. Dies ist insbesondere dann der Fall, wenn, wie hier, nicht jeder A-Scan einzeln getriggert wird, sondern ein einziger Trigger für einen gesamten Frame verwendet wird. Dieses Problem wird noch größer, wenn ein einzelner Trigger für ein gesamtes Volumen, d.h. eine Vielzahl von Frames verwendet wird. Ferner zeigt sich, dass sich diese Probleme durch die Verwendung eines mit der Sweep-Rate phasengelockten Detektions-Taktsignals 38 überraschenderweise einfach und erfolgreich beheben lassen.

Man beachte, dass die feste Phasenbeziehung zwischen dem Sampling und dem Wellenlängen-Sweep hier vollständig auf Grundlage der elektronischen Signale hergestellt wird und das Detektions-Taktsignal 38 nicht, wie es naheliegender wäre, aus einem optischen Interferenzsignal abgeleitet wird (wie dies bei der herkömmlichen k-clock der Fall ist). Der Grund hierfür besteht darin, dass, wie eingangs erläutert, mit zunehmender Sweep-Rate f_{sweep} die Kohärenzlänge des optischen Signals typischerweise abnimmt, was wiederum zu Phasen-Jitter auf dem optisch erzeugten k-clock-Signal führt. Diese Fehlerquelle wird bei der vorliegenden Erfindung ausgeschlossen.

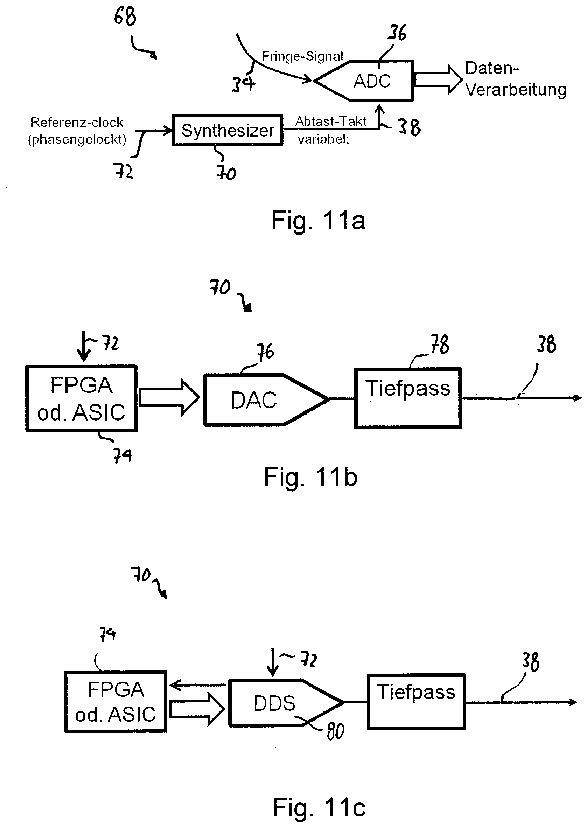

Die Verwendung einer k-clock wäre auch deshalb eine auf den ersten Blick attraktive Wahl, weil sich das Resampling erübrigen würde. Jedoch kann eine ähnliche Funktionalität auch im Rahmen der Erfindung hergestellt werden, indem eine k-clock künstlich erzeugt wird. Das Grundprinzip einer k-clock-Erzeugungseinrichtung 68 ist in Fig. 11a gezeigt. Die Einrichtung 68 umfasst einen Synthesizer 70, der ein schnelles Eingangssignal 72, auch als "Referenz-Clock" bezeichnet, empfängt, das mit dem Sweep-Steuerungssignal 30 (in Fig. 11a nicht gezeigt) phasengelockt ist. Der Synthesizer 70 erzeugt aus diesem phasengelockten Signal die künstliche, elektronische k-clock, die dann als Detektions-Taktsignal 38 in den A/D-Wandler 36 eingekoppelt wird. Das so erzeugte Detektions-Taktsignal 38 hat einen zeitlichen Verlauf, wie er von einer optisch erzeugten k-clock an sich bekannt ist, wird aber im Unterschied hierzu nicht aus dem optischen Signal direkt abgeleitet, sondern mithilfe des Synthesizers 70 künstlich erzeugt. Die Flanken des Detektions-Taktsignals 38 sind dann nicht mehr konstant in der Zeit verteilt, sondern geben die Zeitpunkte an, zu denen das Interferenzsignal 34 abzutasten ist, damit die Abtastpunkte zumindest näherungsweise äquidistant in der optischen Frequenz des Interferenzsignals sind.

Fig. 11b zeigt eine Ausführungsform, bei der das phasengelockte Referenzsignal 72, welches typischerweise eine vergleichsweise hohe Frequenz von zum Beispiel 2 GHz hat, in einen FPGA oder ASIC 74 eingegeben wird, in dem unter Verwendung von Frequenzeinstellungs-Information ein geeignetes digitales Signal erzeugt wird, das an einen D/A-Wandler 76 übergeben wird, um ein analoges Signal zu erzeugen. Das analoge Signal wird zum Zwecke des Anti-Aliasing durch einen Tiefpassfilter 78 geschickt.

Fig. 11c zeigt eine ähnliche Version eines Synthesizers 70, bei dem jedoch das schnelle phasengelockte Signal 72 nicht direkt in einen FPGA oder ASIC 74 eingegeben wird, sondern in einen DDS (Direct Digital Synthesizer) 80. Ein FPGA oder ASIC 74 ist nur vorgesehen, um die Frequenzeinstellungen an den DDS 80 zu übergeben, wodurch die Menge bzw. Rate an übertragenen Daten geringer wird. Der Pfeil vom DDS 80 zum FPGA/ASIC 74 repräsentiert ein Signal, mit dem der DDS 80 die Frequenzeinstellungen vom FPGA/ASIC 74 anfordert.

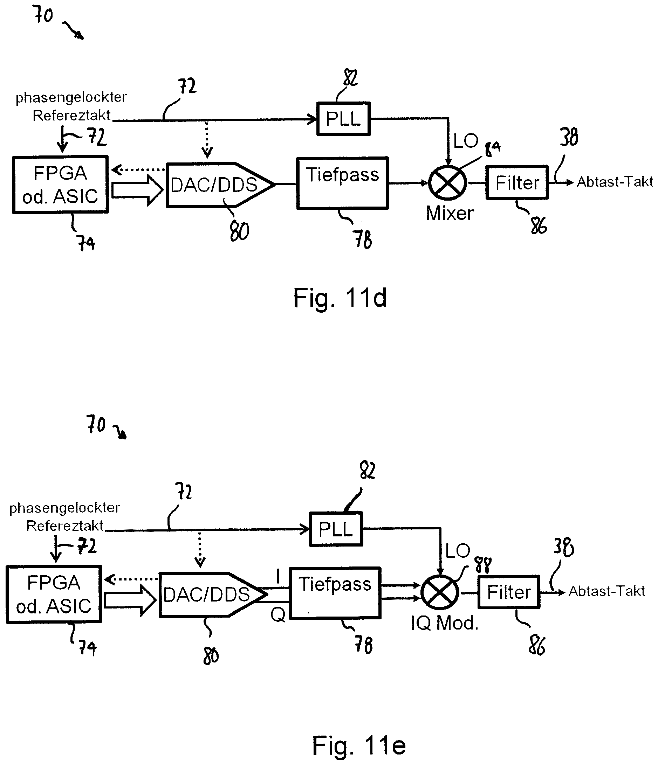

In Fig. 11d wird wiederum ein DDS 80 (wiederum in Kombination mit einem FPGA oder ASIC 74) verwendet, um ein variables Taktsignal zu erzeugen. Ferner wird das zeitlich konstante phasengelockte Referenztaktsignal 72 in einen PLL 82 eingegeben, der ein phasengelocktes Signal mit konstanter Frequenz erzeugt. Das von dem DDS 80 erzeugte Signal mit variabler Frequenz wird in einem Mischer 84 mit dem Signal konstanter Frequenz gemischt, um das Detektions-Taktsignal 38, d. h. den variablen Abtast-Takt zu erzeugen. Ein Filter 86 ist vorgesehen, um ungewollte Mischer-Produkte zu unterdrücken.

Alternativ kann - wie in Fig. 11e gezeigt - anstelle des Mischers 84 auch ein IQ-Modulator 88 verwendet werden, wobei dann von dem variablen Taktsignal im DDS 80 zwei um 90° phasenverschobene Varianten erzeugt werden, die über einen Tiefpassfilter 78 in einen IQ-Modulator 88 eingekoppelt werden.

In der vorliegenden Beschreibung wurden Varianten diskutiert, bei denen stets das Sweep-Steuerungssignal 30 und das Detektions-Taktsignal 38 phasengelockt sind. Wie eingangs erwähnt kann das verbesserte OCT-System der Erfindung jedoch auch mit Sweep-Steuerungsund Detektions-Taktsignalen 30, 38 betrieben werden, die nicht im eigentlichen Sinne phasengelockt sind, sofern die relative Phasenlage und das präzise Frequenzverhältnis der beiden Signale bekannt sind. In diesem Fall können dann die gemessenen Daten digital korrigiert werden, um die präzise Korrelation von Frequenz-Sweep und Interferenzsignal 34, unter Berücksichtigung der Phasenlage, herzustellen. Die vorliegende Erfindung sieht zu diesem Zweck Mittel zum Erzeugen eines Signales oder einer Signalfolge vor, das bzw. die kennzeichnend für das Frequenzverhältnis und/oder die relative Phasenlage des Sweep-Steuerungssignales und des Detektions-Taktsignales ist bzw. sind.

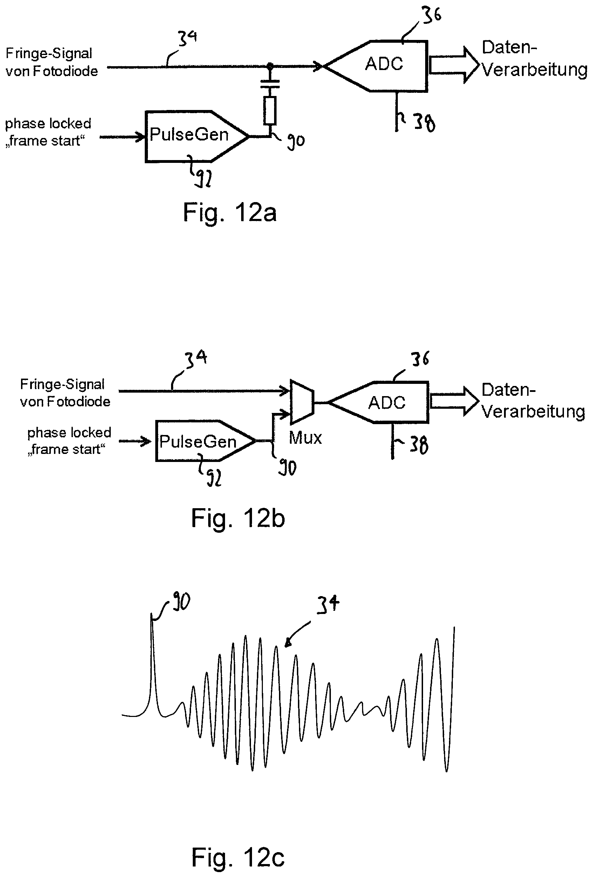

Ein Beispiel hierfür ist in den Figuren 12a, 12b und 12c gezeigt. Zur Feststellung der Phasenlage zwischen dem Sweep-Steuerungssignal 30 und dem Detektions-Taktsignal 38 wird ein Pulssignal 90, im folgenden auch "Startpuls" genannt (siehe Fig. 12c), von einem Pulsgenerator 92 erzeugt und in denselben Eingang der Detektionseinrichtung 36 (A/D-Wandler) eingekoppelt, wie das Interferenzsignal 34. Zwei mögliche Varianten zum Einkoppeln des Startpulses 90 in den A/D-Wandler 36 sind in den Figuren 12a und 12b gezeigt. Der Startpuls 90 ist dabei mit dem Sweep-Steuerungssignal 30 (nicht gezeigt) phasengelockt. Da dieser Startpuls 90 mit dem Detektions-Taktsignal 38 gesampelt wird, lässt sich die Phasenlage zwischen dem Detektions-Taktsignal 38 und dem Startpuls 90 präzise bestimmen.

Ferner kann eine Abfolge von Startpulsen 90 verwendet werden, die ebenfalls mit dem Sweep-Steuerungssignal 30 phasengelockt ist. Auf diese Weise kann auch das Frequenzverhältnis zwischen dem Sweep-Steuerungssignal 30 und dem Detektions-Taktsignal 38 ermittelt werden.

Man beachte, dass ein mit dem Detektions-Taktsignal 38 gesampelter Startpuls 90, der seinerseits mit dem Sweep-Steuerungssignal 30 phasengelockt ist, ein Signal ergibt, das kennzeichnend für die relative Phasenlage des Sweep-Steuerungssignals 30 und des Detektions-Taktsignals 38 ist. Wird eine Abfolge von mehreren solcher Startpulse 90 mit dem Detektions-Taktsignal 38 gesampelt, ist die sich ergebende Signalfolge kennzeichnend für das Frequenzverhältnis des Sweep-Steuerungssignals 30 und des Detektions-Taktsignals 38. Andere Ausführungen sind möglich, solange ein Signal oder eine Signalabfolge erzeugt wird, das die Information bezüglich der Phasenlage und/oder des Frequenzverhältnisses enthält.

Im gezeigten Ausführungsbeispiel werden die Startpulse 90 jeweils zu Beginn eines Frames erzeugt, d. h. bevor die Interferenzdaten 34 von der Photodiode 26 (siehe Fig. 1) erhalten werden. Dies ist in Fig. 12c angedeutet, in dem der Startpuls 90 und nachfolgend ein Interferenzsignal 34 gezeigt ist, das den ersten eineinhalb Sweeps entspricht.

Man beachte, dass die Phaseninformation, die durch den mit dem Detektions-Taktsignal 38 gesampelten Startpuls 90 erhalten wird, nicht schon durch den bloßen Eingang eines Triggers wie Trigger 66 von Fig. 7 geliefert wird, selbst wenn dieser Trigger mit dem Sweep-Steuerungssignal 30 phasengelockt sein sollte, weil das relative Timing von Trigger und A/D-Wandler 36 maximal bis auf eine Sampleperiode des A/D-Wandlers 36 bestimmt werden kann, bei vielen A/D-Wandlern bzw. Datenerfassungskarten auch nur auf mehrere Sampleperioden genau. Obwohl die zeitliche Unbestimmtheit zwischen dem Trigger 66 und dem A/D-Wandler 36, der auch als "Trigger-Jitter" bezeichnet werden kann, auf den ersten Blick unerheblich erscheinen mag, kann dies gleichwohl zu ganz erheblichen Störungen in den Bildern führen, wie die Erfinder überraschend festgestellt haben. Wenn hingegen ein mit dem Sweep-Steuerungssignal 30 phasengelocktes Signal, wie beispielsweise der Startpuls 90, über mehrere Sampleperioden hinweg gesampelt wird, lässt sich die relative Phasenlage mit einer Genauigkeit bestimmen, die unter einer Sampleperiode des A/D-Wandlers 36 liegt, beispielsweise in dem das gesampelte Signal mit der erwarteten Pulsform gefittet wird.

Eine Alternative hierzu besteht darin, bei nicht-phasengelockten Sweep-Steuerungs- und Detektions-Taktsignalen 30, 38 die Zeit zwischen dem Trigger und dem Detektions-Taktsignal 38 zu messen, beispielsweise mit einem Time-to-Time-Digital-Converter (TDC). Dessen Ausgabe wäre ein weiteres Beispiel für ein Signal, das kennzeichnend für die relative Phasenlage des Sweep-Steuerungssignals 30 (sofern der Trigger von diesem abgeleitet ist) und des Detektions-Taktsignals 38 ist.

Obgleich in den Zeichnungen und der vorliegenden Beschreibung bevorzugte Ausführungsbeispiele aufgezeigt und detailliert beschrieben sind, sollte dies als rein beispielhaft und die Erfindung nicht einschränkend angesehen werden. Es wird darauf hingewiesen, dass nur die bevorzugten Ausführungsbeispiele dargestellt und beschrieben sind, und sämtliche Veränderungen und Modifizierungen, die derzeitig und künftig im Umfang der Patentansprüche liegen, geschützt werden sollen. Die vorstehenden Merkmale können in beliebiger Kombination von Bedeutung sein.

### BEZUGSZEICHENLISTE

- 10: Swept-Source-OCT-System
- 12: abstimmbare Lichtquelle
- 14: Interferometer
- 16: erster Arm des Interferometers 14
- 18: zweiter Arm des Interferometers 14
- 20: Zirkulator
- 22: Probe
- 24: Verzögerungsstrecke
- 25: 50/50-Koppler
- 26: Photodiode
- 28: Differenzieller Verstärker
- 30: Sweep-Steuerungssignal
- 31: Lichtquellen-Einheit
- 32: Oszillator
- 33: Rückkopplung
- 34: Interferenzsignal
- 36: AD-Wandler
- 38: Detektions-Taktsignal
- 40: Oszillator
- 41: Datenerfassungs-Einheit
- 42: Digitale Daten
- 44: k-clock-Interferometer
- 46: Phase-Locked-Loop
- 48: Referenzoszillator
- 50: Scan-Steuerungssignal
- 52: Erster PLL
- 54: RAMDAC
- 56: Zweiter PLL
- 58: Bildgebungssteuerung
- 60: Erster Frequenzteiler
- 62: RAMDAC
- 64: Zweier Frequenzteiler
- 66: Trigger
- 68: k-clock-Erzeugungseinrichtung
- 70: Synthesizer
- 72: Phasengelocktes Referenzsignal
- 74: FPGA/ASIC
- 76: D/A-Wandler
- 78: Tiefpassfilter
- 80: DDS
- 82: PLL
- 84: Mischer
- 86: Filter
- 88: IQ-Modulator
- 90: Startpuls
- 92: Pulsgenerator

## Patentansprüche

1. Swept-Source-OCT-System (10), das Folgendes umfasst:
- Mittel (32, 48, 52) zum Erzeugen eines elektronischen Sweep-Steuerungssignales (30) zum Betreiben einer abstimmbaren Lichtquelle (12) derart, dass die abstimmbare Lichtquelle (12) in Antwort auf das Sweep-Steuerungssignal (30) Wellenlängen-Sweeps mit einer Repetitionsrate f_{sweep} durchführt, die von der Frequenz des Sweep-Steuerungssignals (30) abhängt, und
- eine Detektionseinrichtung (36) zum zeitaufgelösten Detektieren eines Interferenzsignals (34) aus einem Probenstrahl und einem Referenzstrahl mithilfe eines Detektions-Taktsignales (38), wobei
• das Sweep-Steuerungssignal (30) und das Detektions-Taktsignal (38) phasengelockt sind, wobei die feste Phasenbeziehung zwischen dem Sweep-Steuerungssignal (30) und dem Detektions-Taktsignal (38) dadurch hergestellt wird, dass Mittel (46, 48) vorgesehen sind, um eines der Signale aus dem anderen abzuleiten, oder um beide Signale (30, 38) aus einem gemeinsamen Ursprungssignal abzuleiten, oder
• Mittel (32) zum Erzeugen eines Signales oder einer Signalfolge vorgesehen sind, das bzw. die kennzeichnend für das Frequenzverhältnis und/oder die relative Phasenlage des Sweep-Steuerungssignales (30) und des Detektions-Taktsignales (38) ist bzw. sind,
**dadurch gekennzeichnet, dass** die abstimmbare Lichtquelle (12) eine gepufferte Lichtquelle ist, mit der aufeinanderfolgende Wellenlängen-Sweeps im Wesentlichen ohne zeitliche Lücke erzeugt werden können, und
das System (10) dazu eingerichtet ist,
- einen Daten-Frame, bestehend aus den Detektionsdaten einer Vielzahl von Wellenlängen-Sweeps, oder
- ein Daten-Volumen, bestehend aus einer Vielzahl von Daten-Frames,
in einem kontinuierlichen Datenstrom, ohne separaten Trigger für jeden einzelnen Tiefenscan zu erzeugen.

2. Swept-Source-OCT-System (10) nach Anspruch 1, bei dem die Detektionseinrichtung (36) geeignet ist, das Interferenzsignal (34) mit dem Takt des Detektions-Taktsignales (38) abzutasten, wobei
die Detektionseinrichtung vorzugsweise einen AD-Wandler (36) umfasst, der geeignet ist, das Detektions-Taktsignal (38) zu empfangen und das Interferenzsignal (34) zu Zeitpunkten, die durch das Detektions-Taktsignal (38) definiert sind, in digitale Daten (42) umzusetzen.

3. Swept-Source-OCT-System (10) nach einem der vorhergehenden Ansprüche, bei dem die Repetitionsrate f_{sweep} der abstimmbaren Lichtquelle (12) mindestens 50 kHz, vorzugsweise mindestens 350 kHz und besonders vorzugsweise mindestens 1,4 MHz beträgt.

4. Swept-Source-OCT-System (10) nach einem der vorhergehenden Ansprüche, bei dem das System (10) ferner eine Scaneinrichtung umfasst, mit der der Probenstrahl über eine Probe (22) gescannt werden kann,
wobei die Scaneinrichtung durch ein Scansignal (50) angesteuert wird, das mit dem Sweep-Steuerungssignal (30) und dem Detektions-Taktsignal (38) phasengelockt ist.

5. Swept-Source-OCT-System (10) nach Ansprüchen 1 und 4, das eine Synchronisationseinheit umfasst, die dazu eingerichtet ist, ein Daten-Frame-Startsignal oder ein Daten-Volumen-Startsignal zu erzeugen, das mit der Position der Scaneinrichtung oder mit dem Scansignal synchronisiert ist und das phasengelockt mit dem Sweep-Steuerungssignal (30) ist,
bei dem die abstimmbare Lichtquelle (12) vorzugsweise eine gepufferte Lichtquelle ist, die dazu eingerichtet ist, einen primären Sweep und einen oder mehrere gepufferte Sweeps zu erzeugen, und bei dem das Daten-Frame-Startsignal oder das Daten-Volumen-Startsignal vorzugsweise auf einen bestimmten dieser Sweeps synchronisiert ist.

6. Swept-Source-OCT-System (10) nach einem der vorhergehenden Ansprüche, das ferner eine Einrichtung zum Regeln des Sweep-Steuerungssignals (30) im Betrieb des Systems (10) umfasst, derart, dass die Kohärenzeigenschaften der Lichtquelle (12) gegenüber Umwelteinflüssen stabilisiert werden .

7. Swept-Source-OCT-System (10) nach einem der vorhergehenden Ansprüche, bei dem Mittel (46, 48) vorgesehen sind, um die feste Phasenbeziehung zwischen dem Sweep-Steuerungssignal (30) und dem Detektions-Taktsignal (38) auf eine oder eine Kombination aus mehreren der folgenden Arten herzustellen:
- Das Detektions-Taktsignal (38) wird mithilfe eines PLL (46) aus dem Sweep-Steuerungssignal (30) erzeugt, wobei die Frequenz des Detektions-Taktsignals (38) ein Vielfaches, insbesondere ein ganzzahliges Vielfaches der Frequenz des Sweep-Steuerungssignals (30) beträgt,
- aus einem Signal, dessen Frequenz ein Vielfaches der Frequenz des Sweep-Steuerungssignals (30) beträgt, wird
• das Sweep-Steuerungssignal (30) durch Frequenzteilung und
• das Detektions-Taktsignal (38) durch Frequenzmultiplikation mithilfe eines PLL (46) erzeugt, oder
- aus dem Detektions-Taktsignal (38) wird das Sweep-Steuerungssignal (30) durch Frequenzteilung abgeleitet.

8. Swept-Source-OCT-System (10) nach einem der vorhergehenden Ansprüche, das ferner eine k-clock-Erzeugungseinrichtung (68) zum elektronischen Erzeugen, insbesondere digitalen Erzeugen einer k-clock, basierend auf einem mit dem Sweep-Steuerungssignal (30) phasengelockten Eingangssignal (72) umfasst,
wobei das elektronisch, insbesondere digital erzeugte k-clock-Signal als Detektions-Taktsignal (38) für die Detektionseinrichtung (36) dient.

9. Swept-Source-OCT-System (10) nach Anspruch 8, bei dem die k-clock-Erzeugungseinrichtung (68) einen Synthesizer (70) umfasst, der verbunden ist, um das mit dem Sweep-Steuerungssignal (30) phasengelockte Eingangssignal (72) zu empfangen und geeignet ist, das k-clock-Signal, insbesondere digital, zu erzeugen,
wobei der Synthesizer (70) vorzugsweise eine oder mehrere der folgenden Komponenten umfasst:
- einen FPGA oder einen ASIC (74), der das mit dem Sweep-Steuerungssignal (30) phasengelockte Eingangssignal (72) empfängt und daraus das k-clock-Signal oder ein Vorläufersignal desselben erzeugt,
- einen DDS (80), der das mit dem Sweep-Steuerungssignal (30) phasengelockte Eingangssignal (72) empfängt und mit einem ASIC oder FPGA (74) verbunden ist, um aus diesem Frequenzinformation zur Erzeugung der k-clock zu erhalten,
- einen Mixer (84), der dazu eingerichtet ist, das mit dem Sweep-Steuerungssignal (30) phasengelockte Eingangssignal (72) mit einem Signal variabler Frequenz zu mischen, um das k-clock-Signal oder einen Vorläufer desselben zu erzeugen,
- einen IQ-Modulator (88), der dazu eingerichtet ist, das mit dem Swept-Steuerungssignal (30) phasengelockte Eingangssignal (72) mit zwei um 90° phasenverschobenen Signalen variabler Frequenz zu modulieren und/oder
- einen Tiefpassfilter (78) im Bereich des Ausgangs des Synthesizers (70).

10. Swept-Source-OCT-System (10) nach einem der vorhergehenden Ansprüche, das einen Speicher umfasst, in dem Daten zur Rekalibrierung oder zum Resampling des detektierten Interferenzsignals (34) herstellerseitig gespeichert sind, oder mit
- einem zusätzlichen Interferometer, das dazu eingerichtet ist, während des Betriebes des Systems (10) ein weiteres Interferenzsignal zu erzeugen, und
- einer Einrichtung zur Detektion des weiteren Interferenzsignals und zur Berechnung von Daten zur Rekalibrierung oder zum Resampling aus dem detektierten weiteren Interferenzsignal,
bei dem die Daten insbesondere Zeitpunkte für Stützstellen enthalten, an denen das Interferenzsignal (34) durch Interpolation des mithilfe der Detektionseinrichtung (36) unter dem Detektions-Taktsignal (38) gemessenen Interferenzsignals zu ermitteln ist, wobei die Zeitpunkte so gewählt sind, dass die Abtastpunkte äquidistant in der optischen Frequenz des Interferenzsignals sind.

11. Swept-Source-OCT-System (10) nach einem der Ansprüche 1 bis 6, bei dem die Mittel zum Erzeugen eines Signales oder einer Signalfolge das bzw. die kennzeichnend für das Frequenzverhältnis und/oder die relative Phasenlage des Sweep-Steuerungssignales (30) und des Detektions-Taktsignales (38) ist bzw. sind, folgendes umfassen:
- Mittel (92) zum Erzeugen eines mit dem Sweep-Steuerungssignal (30) phasengelockten Referenzsignals (90), insbesondere Pulssignals, oder eine Folge von derartigen Referenzsignalen (90), und
- Mittel zum Einkoppeln des Referenzsignals (90) oder der Folge von Referenzsignalen (90) in den Eingang der Detektionseinrichtung (36).

12. Swept-Source-OCT-System (10) nach Anspruch 11, bei dem Mittel vorgesehen sind, um aus dem mithilfe des Detektions-Taktsignales (38) detektierten Referenzsignal (90) oder der Referenzsignalfolge das Frequenzverhältnis und/oder die relative Phasenlage zwischen dem Sweep-Steuerungssignal (30) und dem Detektions-Taktsignal (38) zu ermitteln.

13. Verfahren zur Erzeugung von OCT-Bildern in einem Swept-Source-OCT-System (10), bei dem eine abstimmbare Lichtquelle (12) durch ein elektronisches Sweep-Steuerungssignal (30) derart angesteuert wird, dass die abstimmbare Lichtquelle (12) Wellenlängen-Sweeps mit einer Repetitionsrate f_{sweep} durchführt, die von der Frequenz des Sweep-Steuerungssignals (30) abhängt, und bei dem ein Interferenzsignal (34) aus einem Probenstrahl und einem Referenzstrahl in einer Detektionseinrichtung (36) mithilfe eines Detektions-Taktsignales (38) detektiert wird, wobei
- das Sweep-Steuerungssignal (30) und das Detektions-Taktsignal (38) phasengelockt sind, wobei die feste Phasenbeziehung zwischen dem Sweep-Steuerungssignal (30) und dem Detektions-Taktsignal (38) dadurch hergestellt wird, dass Mittel (46, 48) vorgesehen sind, um eines der Signale aus dem anderen abzuleiten, oder um beide Signale (30, 38) aus einem gemeinsamen Ursprungssignal abzuleiten, oder
- ein Signal oder eine Signalfolge erzeugt wird, das bzw. die kennzeichnend für das Frequenzverhältnis und/oder relative Phasenlage des Sweep-Steuerungssignales (30) und des Detektions-Taktsignales (38) ist bzw. sind,
**dadurch gekennzeichnet, dass** die abstimmbare Lichtquelle (12) eine gepufferte Lichtquelle ist, mit der aufeinanderfolgende Wellenlängen-Sweeps im wesentlichen ohne zeitliche Lücke erzeugt werden können, und wobei
- ein Daten-Frame, bestehend aus den Detektionsdaten einer Vielzahl von Wellenlängen-Sweeps, oder
- ein Daten-Volumen, bestehend aus einer Vielzahl von Daten-Frames,
in einem kontinuierlichen Datenstrom, ohne separaten Trigger für jeden einzelnen Tiefenscan, erzeugt wird.

## Claims

1. A swept-source OCT system (10) that comprises the following:
- means (32, 48, 52) for generating an electronic sweep control signal (30) for operating a tunable light source (12) in such a way that the tunable light source (12) carries out wavelength sweeps with a repetition rate f_{sweep} that is dependent on the frequency of the sweep control signal (30) in response to the sweep control signal (30), and
- a detection device (36) for the time-resolved detection of an interference signal (34) of a sample beam and a reference beam with the aid of a detection clock signal (38), wherein
• the sweep control signal (30) and the detection clock signal (38) are phase-locked, wherein the fixed phase relation between the sweep control signal (30) and the detection clock signal (38) is realized in that means (46, 48) are provided for deriving one of the signals from the other signal or for deriving both signals (30, 38) from a common source signal, or
• means (32) are provided for generating a signal or a signal sequence that is respectively characteristic for the frequency ratio and/or the relative phase position of the sweep control signal (30) and the detection clock signal (38),
**characterized in that** the tunable light source (12) is a buffered light source, by means of which successive wavelength sweeps can be essentially carried out without time gap, wherein the system (10) is designed for generating
- a data frame consisting of the detection data of a plurality of wavelength sweeps, or
- a data volume consisting of a plurality of data frames in a continuous data stream, without separate trigger for every individual depth scan.

2. The swept-source OCT system (10) according to claim 1, in which the detection device (36) is suitable for sampling the interference signal (34) with the cycle of the detection clock signal (38), wherein
the detection device preferably comprises an AD converter (36) that is suitable for receiving the detection clock signal (38) and for converting the interference signal (34) into digital data (42) at points in time that are defined by the detection clock signal (38).

3. The swept-source OCT system (10) according to one of the preceding claims, in which the repetition rate f_{sweep} of the tunable light source (12) amounts to at least 50 kHz, particularly at least 350 kHz, especially at least 1.4 MHz.

4. The swept-source OCT system (10) according to one of the preceding claims, in which the system (10) furthermore comprises a scanning device, by means of which the sample beam can be scanned over a sample (22),
wherein the scanning device is controlled by a scan signal (50) that is phase-locked with the sweep control signal (30) and the detection clock signal (38).

5. The swept-source OCT system (10) according to claims 1 and 4, comprising a synchronization unit that is designed for generating a data frame start signal or a data volume start signal that is synchronized with the position of the scanning device or with the scan signal and phase-locked with the sweep control signal (30), wherein
the tunable light source (12) is preferably a buffered light source that is designed for carrying out a primary sweep and one or more buffered sweeps, and in which the data frame start signal or the data volume start signal is preferably synchronized with one certain sweep of these sweeps.

6. The swept-source OCT system (10) according to one of the preceding claims, furthermore comprising a device for closed-loop control of the sweep control signal (30) during the operation of the system (10) in such a way that the coherence characteristics of the light source (12) are stabilized against environmental influences.

7. The swept-source OCT system (10) according to one of the preceding claims, in which means (46, 48) are provided for realizing the fixed phase relation between the sweep control signal (30) and the detection clock signal (38) in accordance with one of the following variations or a combination of several of the following variations:
- the detection clock signal (38) is generated from the sweep control signal (30) with the aid of a PLL (46), wherein the frequency of the detection clock signal (38) amounts to a multiple, particularly an integral multiple, of the frequency of the sweep control signal (30),
- from a signal, the frequency of which amounts to a multiple of the frequency of the sweep control signal (30),
• the sweep control signal (30) is generated by means of frequency division and
• the detection clock signal (38) is generated by means of frequency multiplication with the aid of a PLL, or
- the sweep control signal (30) is derived from the detection clock signal (38) by means of frequency division.

8. The swept-source OCT system (10) according to one of the preceding claims, furthermore comprising a k-clock generator (68) for generating a k-clock electronically, in particular digitally, based on an input signal (72) that is phase-locked with the sweep control signal (30),
wherein the electronically, in particular digitally, generated k-clock signal serves as detection clock signal (38) for the detection device (36).

9. The swept-source OCT system (10) according to claim 8, in which the k-clock generator (68) comprises a synthesizer (70) that is connected for receiving the input signal (72) phase-locked with the sweep control signal (30) and suitable for generating the k-clock signal, in particular, digitally,
wherein the synthesizer (70) preferably comprises one or more of the following components:
- a FPGA or an ASIC (74) that receives the input signal (72) phase-locked with the sweep control signal (30) and generates the k-clock signal or a precursor signal thereof from said input signal,
- a DDS (80) that receives the input signal (72) phase-locked with the sweep control signal (30) and is connected to an ASIC or a FPGA (74) in order to receive frequency information for generating the k-clock therefrom,
- a mixer (84) that is designed for mixing the input signal (72) phase-locked with the sweep control signal (30) with a signal of variable frequency in order to generate the k-clock signal or a precursor signal thereof,
- an IQ modulator (88) that is designed for modulating the input signal (72) phase-locked with the sweep control signal (30) with two signals of variable frequency that are phase-shifted by 90° and/or
- a low-pass filter (78) in the region of the output of the synthesizer (70).

10. The swept-source OCT system (10) according to one of the preceding claims, comprising a memory, in which data for a recalibration or for a resampling of the detected interference signal (34) is stored by the manufacturer, or
with
- an additional interferometer that is designed for generating an additional interference signal during the operation of the system (10) and
- a device for detecting the additional interference signal and for calculating the recalibration or resampling data from the detected additional interference signal,
in which the data contains, in particular, points in time for supporting points, at which the interference signal (34) needs to be determined by interpolating the interference signal measured with the aid of the detection clock signal (38) of the detection device (36), wherein the points in time are chosen such that the sampling points are equidistant in the optical frequency of the interference signal.

11. The swept-source OCT system (10) according to one of claims 1 to 6, in which the means for generating a signal or a signal sequence that is respectively characteristic for the frequency ratio and/or the relative phase position of the sweep control signal (30) and the detection clock signal (38) comprise the following:
- means (92) for generating a reference signal (90), particularly a pulse signal, that is phase-locked with the sweep control signal (30) or a sequence of such reference signals (90) and
- means for coupling the reference signal (90) or the sequence of reference signals (90) into the input of the detection device (36).

12. The swept-source OCT system (10) according to claim 11, in which means are provided for determining the frequency ratio and/or the relative phase position between the sweep control signal (30) and the detection clock signal (38) from the reference signal (90) or the reference signal sequence detected with the aid of the detection clock signal (38).

13. A method for generating OCT images in a swept-source OCT system (10), in which a tunable light source (12) is controlled by an electronic sweep control signal (30) in such a way that the tunable light source (12) carries out wavelength sweeps with a repetition rate f_{sweep} that is dependent on the frequency of the sweep control signal (30), and in which an interference signal (34) of a sample beam and a reference beam is detected in a detection device (36) with the aid of a detection clock signal (30), wherein
- the sweep control signal (30) and the detection clock signal (38) are phase-locked, wherein the fixed phase relation between the sweep control signal (30) and the detection clock signal (38) is realized in that means (46, 48) are provided for deriving one of the signals from the other signal or for deriving both signals (30, 38) from a common source signal, or
- a signal or a signal sequence is generated that is respectively characteristic for the frequency ratio and/or the relative phase position of the sweep control signal (30) and the detection clock signal (38),
**characterized in that** the tunable light source (12) is a buffered light source, by means of which successive wavelength sweeps can be essentially carried out without time gap, and wherein
- data frame consisting of the detection data of a plurality of wavelength sweeps, or
- a data volume consisting of a plurality of data frames
are generated in a continuous data stream, without separate trigger for every individual depth scan.

## Revendications

1. Système OCT à source à balayage (10), qui comprend ce qui suit :
- des moyens (32, 48, 52) destinés à la production d'un signal de commande de balayage (30) électronique pour le fonctionnement d'une source de lumière (12) accordable de telle sorte que, en réponse au signal de commande de balayage (30), la source de lumière (12) accordable effectue des balayages de longueur d'onde à un taux de répétition f_{sweep} qui dépend de la fréquence du signal de commande de balayage (30), et
- un dispositif de détection (36) destiné à la détection résolue dans le temps d'un signal d'interférence (34) en provenance d'un faisceau d'échantillonnage et d'un faisceau de référence à l'aide d'un signal de cadencement de détection (38),
• le signal de commande de balayage (30) et le signal de cadencement de détection (38) étant verrouillés en phase, la relation de phase fixe entre le signal de commande de balayage (30) et le signal de cadencement de détection (38) étant établie par le fait qu'il est prévu des moyens (46, 48) pour dériver l'un des signaux à partir de l'autre signal ou pour dériver les deux signaux (30, 38) à partir d'un signal initial commun, ou
• des moyens (32) étant prévus pour la production d'un signal ou d'une séquence de signaux qui est ou respectivement sont caractéristique(s) du rapport de fréquence et/ou de la position de phase relative du signal de commande de balayage (30) et du signal de cadencement de détection (38),
**caractérisé en ce que** la source de lumière (12) accordable est une source de lumière mise en tampon avec laquelle des balayages de longueur d'onde successifs peuvent être produits essentiellement sans lacune temporelle, et
le système (10) est agencé pour produire
- une trame de données, composée des données de détection d'une multiplicité de balayages de longueur d'onde, ou
- un volume de données, composé d'une multiplicité de trames de données, dans un flux de données continu, sans déclencheur séparé pour chaque scan en profondeur.

2. Système OCT à source à balayage (10) selon la revendication 1, dans lequel le dispositif de détection (36) est approprié pour balayer le signal d'interférence (34) avec la cadence du signal de cadencement de détection (38),
le dispositif de détection comprenant de préférence un convertisseur A/N (36) qui est approprié pour recevoir le signal de cadencement de détection (38) et pour convertir en données numériques (42) le signal d'interférence (34) à des instants qui sont définis par le signal de cadencement de détection (38).

3. Système OCT à source à balayage (10) selon l'une des revendications précédentes, dans lequel le taux de répétition f_{sweep} de la source de lumière (12) accordable est égal à au moins 50 Hz, de préférence à au moins 350 kHz et de façon particulièrement préférée à au moins 1,4 MHz.

4. Système OCT à source à balayage (10) selon l'une des revendications précédentes, dans lequel le système (10) comprend en outre un dispositif de scanner avec lequel le faisceau d'échantillonnage peut être scanné par le biais d'un échantillon (22),
le dispositif de scanner étant piloté par un signal de scanner (50) qui est verrouillé en phase avec le signal de commande de balayage (30) et le signal de cadencement de détection (38).

5. Système OCT à source à balayage (10) selon les revendications 1 et 4, qui comprend une unité de synchronisation qui est agencée pour produire un signal de départ de trame de données ou un signal de départ de volume de données qui est synchronisé avec la position du dispositif de scanner ou avec le signal de scanner et qui est verrouillé en phase avec le signal de commande de balayage (30),
dans lequel la source de lumière (12) accordable est de préférence une source de lumière mise en tampon qui est agencée pour produire un balayage primaire et un ou plusieurs balayages mis en tampon, et dans lequel le signal de départ de trame de données ou le signal de départ de volume de données est de préférence synchronisé sur un balayage défini parmi ces balayages.

6. Système OCT à source à balayage (10) selon l'une des revendications précédentes, qui comprend en outre un dispositif destiné à la régulation du signal de commande de balayage (30) dans le fonctionnement du système (10) de telle sorte que les caractéristiques de cohérence de la source de lumière (12) sont stabilisées vis-à-vis d'influences ambiantes.

7. Système OCT à source à balayage (10) selon l'une des revendications précédentes, dans lequel des moyens (46, 48) sont prévus pour établir la relation de phase fixe entre le signal de commande de balayage (30) et le signal de cadencement de détection (38) d'une façon suivante ou d'une combinaison de plusieurs des façons suivantes :
- le signal de cadencement de détection (38) est produit à l'aide d'une boucle à verrouillage de phase (46) à partir du signal de commande de balayage (30), la fréquence du signal de cadencement de détection (38) étant un multiple, en particulier un multiple entier, de la fréquence du signal de commande de balayage (30),
- à partir d'un signal dont la fréquence est un multiple de la fréquence du signal de commande de balayage (30)
• le signal de commande de balayage (30) est produit par une division de fréquence et
• le signal de cadencement de détection (38) est produit par une multiplication de fréquence à l'aide d'une boucle à verrouillage de phase (46), ou
- le signal de commande de balayage (30) est dérivé du signal de cadencement de détection (38) par division de fréquence.

8. Système OCT à source à balayage (10) selon l'une des revendications précédentes, qui comprend en outre un dispositif de production d'horloge k (68) destiné à la production électronique, en particulier à la production numérique, d'une horloge k sur la base d'un signal d'entrée (72) verrouillé en phase avec le signal de commande de balayage (30), le signal d'horloge k produit électroniquement, en particulier numériquement, servant de signal de cadencement de détection (38) pour le dispositif de détection (36).

9. Système OCT à source à balayage (10) selon la revendication 8, dans lequel le dispositif de production d'horloge k (68) comprend un synthétiseur (70) qui est raccordé pour recevoir le signal d'entrée (72) verrouillé en phase avec le signal de commande de balayage (30), et qui est approprié pour produire, en particulier numériquement, le signal d'horloge k, le synthétiseur (70) comprenant de préférence un ou plusieurs des composants suivants :
- un FPGA ou un ASIC (74) qui reçoit le signal d'entrée (72) verrouillé en phase avec le signal de commande de balayage (30) et qui produit à partir de cela le signal d'horloge k ou un signal précurseur de celui-ci,
- un DDS (80) qui reçoit le signal d'entrée (72) verrouillé en phase avec le signal de commande de balayage (30) et qui est raccordé à un ASIC ou un FPGA (74) pour obtenir à partir de celui-ci une information de fréquence pour la production de l'horloge k,
- un mélangeur (84) qui est agencé pour mélanger le signal d'entrée (72) verrouillé en phase avec le signal de commande de balayage (30) avec un signal de fréquence variable pour produire le signal d'horloge k ou un précurseur de celui-ci,
- un modulateur IQ (88) qui est agencé pour moduler le signal d'entrée (72) verrouillé en phase avec le signal de commande de balayage (30) avec deux signaux déphasés de 90°, de fréquence variable, et/ou
- un filtre passe-bas (78) dans la zone de la sortie du synthétiseur (70).

10. Système OCT à source à balayage (10) selon l'une des revendications précédentes, qui comprend une mémoire dans laquelle sont enregistrées, côté fabricant, des données de réétalonnage ou de rééchantillonnage du signal d'interférence (34) détecté, ou avec
- un interféromètre supplémentaire qui est agencé pour produire un autre signal d'interférence pendant le fonctionnement du système (10), et
- avec un dispositif destiné à la détection de l'autre signal d'interférence et au calcul de données de réétalonnage ou de rééchantillonnage à partir de l'autre signal d'interférence détecté,
dans lequel les données contiennent en particulier des instants pour des points d'appui au niveau desquels le signal d'interférence (34) doit être déterminé par interpolation du signal d'interférence mesuré à l'aide du dispositif de détection (36) sous le signal de cadencement de détection (38), les instants étant choisis de telle sorte que les points de balayage sont équidistants dans la fréquence optique du signal d'interférence.

11. Système OCT à source à balayage (10) selon l'une des revendications 1 à 6, dans lequel les moyens destinés à la production d'un signal ou d'une séquence de signaux qui est caractéristique du rapport de fréquence et/ou de la position de phase relative du signal de commande de balayage (30) et du signal de cadencement de détection (38) comprennent ce qui suit :
- des moyens (92) destinés à la production d'un signal de référence (90), en particulier d'un signal d'impulsion, verrouillé en phase avec le signal de commande de balayage (30), ou une séquence de tels signaux de référence (90), et
- des moyens destinés au couplage du signal de référence (90) ou de la séquence de signaux de référence (90) dans l'entrée du convertisseur A/N (36).

12. Système OCT à source à balayage (10) selon la revendication 11, dans lequel des moyens sont prévus pour déterminer le rapport de fréquence et/ou la position de phase relative entre le signal de commande de balayage (30) et le signal de cadencement de détection (38) à partir du signal de référence (90) ou de la séquence de signaux de référence détecté(s) à l'aide du signal de cadencement de détection (38).

13. Procédé de production d'images OCT dans un système OCT à source à balayage (10), dans lequel une source de lumière (12) accordable est pilotée par un signal de commande de balayage (30) électronique de telle sorte que la source de lumière (12) accordable effectue des balayages de longueur d'onde à un taux de répétition f_{sweep} qui dépend de la fréquence du signal de commande de balayage (30), et dans lequel un signal d'interférence (34) en provenance d'un faisceau d'échantillonnage et d'un faisceau de référence est détecté dans un dispositif de détection (36) à l'aide d'un signal de cadencement de détection (38),
- le signal de commande de balayage (30) et le signal de cadencement de détection (38) étant verrouillés en phase, la relation de phase fixe étant établie entre le signal de commande de balayage (30) et le signal de cadencement de détection (38) par le fait que des moyens (46, 48) sont prévus pour dériver l'un des signaux à partir de l'autre signal ou pour dériver les deux signaux (30, 38) à partir d'un signal initial commun, ou
- un signal ou une séquence de signaux étant produit(e), qui est caractéristique du rapport de fréquence et/ou de la position de phase relative du signal de commande de balayage (30) et du signal de cadencement de détection (38),
**caractérisé en ce que** la source de lumière (12) accordable est une source de lumière mise en tampon avec laquelle des balayages de longueur d'onde successifs peuvent être produits essentiellement sans lacune temporelle, et
- une trame de données, composée des données de détection d'une multiplicité de balayages de longueur d'onde, ou
- un volume de données, composé d'une multiplicité de trames de données,
étant produit(e) dans un flux de données continu, sans déclencheur séparé, pour chaque scan en profondeur individuel.
